# EUROPÄISCHE PATENTSCHRIFT

(11) **EP 3 394 689 B1**
(45) Veröffentlichungstag und Bekanntmachung des Hinweises auf die Patenterteilung: **22.04.2020**
(21) Anmeldenummer: 16819908.1
(22) Anmeldetag: 21.12.2016
(51) Int. Cl.: G05B 19/418

(54) **VERFAHREN ZUM SORTIEREN VON FÖRDEROBJEKTEN AUF EINER FÖRDERANLAGE MITTELS ZEITSTEUERUNG**
METHOD FOR SORTING CONVEYED OBJECTS ON A CONVEYOR SYSTEM USING TIME CONTROL
PROCÉDÉ POUR TRIER DES OBJETS TRANSPORTÉS SUR UNE INSTALLATION DE TRANSPORT AU MOYEN D'UN COMMANDE TEMPORELLE

(30) Priorität: 21.12.2015 AT 510872015
(43) Veröffentlichungstag der Anmeldung: 31.10.2018
(73) Patentinhaber: TGW Logistics Group GmbH, 4614 Marchtrenk (AT)
(72) Erfinder: AHAMMER, Christian, 4623 Gunskirchen (AT); SCHRÖPF, Harald Johannes, 4600 Wels (AT)
(74) Vertreter: Burger, Hannes
(86) Internationale Anmeldenummer: PCT/EP2016/082091
(87) Internationale Veröffentlichungsnummer: WO 2017/108900

(56) Entgegenhaltungen:
- EP-A1- 1 462 393
- US-A- 5 733 098
- US-A1- 2004 254 674
- US-A1- 2009 099 686

## Beschreibung

Die Erfindung betrifft ein Verfahren zum Bündeln von Förderströmen an einem Fördertechnikelement/Knoten mit mehreren eingehenden Fördersegmenten, zumindest einer Ankopplung an ein abgehendes Fördersegment, auf das die eingehenden Fördersegmente zusammengeführt werden, und mehreren Anhalteeinrichtungen zum Anhalten von Förderobjekten beziehungsweise eines Förderflusses auf den eingehenden Fördersegmenten. Weiterhin betrifft die Erfindung ein Fördertechnikelement / einen Knoten zum Bündeln von Förderströmen, mit mehreren eingehenden Fördersegmenten, zumindest einer Ankopplung für ein abgehendes Fördersegment, auf das die eingehenden Fördersegmente zusammengeführt werden, und mehreren Anhalteeinrichtungen zum Anhalten von Förderobjekten beziehungsweise eines Förderflusses auf den eingehenden Fördersegmenten. Schließlich betrifft die Erfindung auch eine Förderanlage mit mehreren solchen Fördertechnikelementen/Knoten, wobei zumindest eine Ankopplung für ein abgehendes Fördersegment des einen Fördertechnikelements/Knotens mit einem eingehenden Fördersegment eines anderen Fördertechnikelements/Knotens direkt oder indirekt verbunden ist.

Ein Verfahren, ein Fördertechnikelement sowie eine Förderanlage der genannten Art sind grundsätzlich bekannt. Dabei werden mehrere an einem Fördertechnikelement eingehende Förderströme bedarfsweise angehalten und auf einen oder mehrere Ausgangsförderströme weitergeleitet, um Förderobjekte gezielt zu einem oder mehreren Zielen zu leiten (z.B. US 2004/254674 A1). In der Regel verwaltet eine übergeordnete Steuerung eine Reihe von Kommissionieraufträgen und steuert die Elemente der Förderanlage so an, dass die einem Ziel (z.B. einem Kommissionierarbeitsplatz) zugeordneten Förderobjekte aus einem Lager ausgelagert und an das genannte Ziel transportiert werden, insbesondere in einer vorgegebenen Reihenfolge oder Sequenz. Entlang der Förderstrecke sind dazu Sensoren angeordnet, welche die passierenden Förderobjekte registrieren und der übergeordneten Steuerung melden, sodass diese Informationen darüber hat, wo sich welches Förderobjekt gerade befindet und wie die Förderanlage davon ausgehend anzusteuern ist. Insbesondere bei vielen zu versorgenden Zielen und einer großen Vielfalt an zu transportierenden Objekten resultiert eine komplexe steuerungstechnische Aufgabe, welche den Betrieb und insbesondere die Inbetriebnahme einer Förderanlage erschwert.

In einer einfachen Ausführungsform einer solchen Steuerung kann ein Förderobjekt, das einen solchen Sensor passiert, die Freigabe des an einem Fördertechnikelement eingehenden Förderstroms auslösen ("triggern"). Allerdings führt dieses vereinfachte Verfahren nur zu mäßigem Durchsatz durch die Förderanlage und daher nur zu einer geringen Zahl an ausgeführten Aufträgen pro Zeiteinheit.

Eine Aufgabe der Erfindung ist es daher, ein verbessertes Verfahren und ein verbessertes Fördertechnikelement zum Bündeln von Förderströmen anzugeben. Insbesondere soll die Komplexität einer Steuerung für eine Förderanlage reduziert beziehungsweise der Durchsatz durch dieselbe erhöht werden.

Die Aufgabe der Erfindung wird mit einem Verfahren der eingangs genannten Art gelöst, bei dem
- für die Förderobjekte Soll-Ankunfts-Zeitpunkte berechnet werden, an dem die Förderobjekte planmäßig an einem Zielort eintreffen,
- für ein an einem Fördertechnikelement/Knoten wartendes Förderobjekt eine Soll-Durchlaufzeit berechnet wird, welche das Förderobjekt planmäßig für den Transport von einer momentanen Position bis zum Zielort benötigt, und
- das Förderobjekt zu einem Freigabe-Zeitpunkt freigegeben wird, welcher im Wesentlichem dem Soll-Ankunfts-Zeitpunkt weniger der Soll-Durchlaufzeit entspricht.

Die Aufgabe der Erfindung wird auch mit einem Fördertechnikelement/Knoten der eingangs genannten Art gelöst, zusätzlich umfassend
- eine Steuerung, welche dazu eingerichtet ist, ein Förderobjekt zu einem Freigabe-Zeitpunkt freizugeben, welcher im Wesentlichem einem Soll-Ankunfts-Zeitpunkt, an dem die Förderobjekte planmäßig an einem Zielort eintreffen, weniger einer Soll-Durchlaufzeit, welche das Förderobjekt planmäßig für den Transport von einer momentanen Position bis zum Zielort benötigt, entspricht.

Die Aufgabe der Erfindung wird schließlich auch durch eine Förderanlage mit mehreren Fördertechnikelementen/Knoten der oben genannten Art gelöst, wobei zumindest eine Ankopplung für ein abgehendes Fördersegment des einen Fördertechnikelements/Knotens mit einem eingehenden Fördersegment eines anderen Fördertechnikelements/Knotens direkt oder indirekt verbunden ist.

Durch die vorgeschlagenen Maßnahmen wird eine einfache Vorschrift zum Leiten und Sortieren von Förderobjekten verwirklicht, die aber dennoch einen hohen Durchsatz ermöglicht. Konkret werden für die Förderobjekte in einem ersten Schritt Soll-Ankunfts-Zeitpunkte berechnet, an denen die Förderobjekte planmäßig an einem Zielort eintreffen sollen. Insbesondere werden die Soll-Ankunfts-Zeitpunkte entsprechend einer Sortierreihenfolge berechnet. Durch aufeinander folgende Soll-Ankunfts-Zeitpunkte ergibt sich eine Reihenfolge von Förderobjekten. Sodann wird für ein an einem Fördertechnikelement/Knoten wartendes Förderobjekt - wie bereits oben beschrieben - eine Soll-Durchlaufzeit und ein Freigabe-Zeitpunkt berechnet. Es ergibt sich im Wesentlichen eine Zeitsteuerung für die einzelnen Fördertechnikelemente/Knoten.

Die Steuerung für das Fördertechnikelement / den Knoten ist nun generell dazu eingerichtet, ein Förderobjekt zu dem berechneten Freigabe-Zeitpunkt freizugeben. Darüber hinaus kann die Steuerung auch dazu eingerichtet sein, die Freigabe-Zeitpunkte anhand der Soll-Ankunfts-Zeitpunkte und der Soll-Durchlaufzeiten zu berechnen. Alternativ kann diese Berechnung respektive die Berechnung der Soll-Freigabezeitpunkte auch von einer übergeordneten Steuerung ausgeführt werden. Auch die Berechnung der Soll-Ankunfts-Zeitpunkte für die Förderobjekte, an dem diese planmäßig an einem Zielort eintreffen sollen, wird vorteilhaft von einer zentralen beziehungsweise übergeordneten Steuerung übernommen. Beispielsweise kann ein passender Förderablauf durch Simulation ermittelt werden. Dazu wird ein Abbild der realen Förderanlage in einen Rechner geladen, welcher einen Förderablauf in einer Simulation nachstellt. Die Simulation kann dazu genutzt werden, einen vorgegebenen Förderablauf dahingehend zu überprüfen, ob eine vorgegebene Sortierreihenfolge eingehalten wird. Ist dies nicht der Fall, so kann der Förderablauf durch Mutation sukzessive so lange verbessert werden, bis die Sortierreihenfolge eingehalten wird. In Folge wird dieser simulierte Förderablauf auf die reale Förderanlage angewandt.

Durch die vorgeschlagenen Maßnahmen entfällt für die Steuerung am Fördertechnikelement/Knoten die Notwendigkeit, komplizierte Berechnungen für das Sortieren von Förderobjekten auszuführen. Stattdessen arbeitet die genannte Steuerung zeitbasiert und kann daher einfach aufgebaut sein und auch besonders schnell arbeiten.

Die Angabe "im Wesentlichen" bedeutet im gegebenen Zusammenhang insbesondere eine Abweichung von +/- 10% von einem berechneten Soll-Zeitpunkt. Wurde beispielsweise errechnet, dass ein bestimmtes Förderobjekt zum Zeitpunkt 5:24 Minuten, entsprechend 324 Sekunden freizugeben ist, dann bedeutet die Angabe "im Wesentlichen" insbesondere eine Freigabe in einem Zeitfenster von 292 Sekunden bis 356 Sekunden.

Unter einem "Fördertechnikelement" ist im Rahmen der Erfindung jede Einrichtung zur Förderung und/oder Manipulation von Förderobjekten zu verstehen, welche Förderströme zusammenführt und über ein abgehendes Fördersegment oder mehrerer solcher Segmente weiterführt. Insbesondere kann das genannte Fördertechnikelement auch als Knoten aufgefasst werden, über den Förderströme geführt werden. Konkrete Beispiele für solche Fördertechnikelemente sind alle Arten von Einschleusern, Einmündungen von Nebenförderbahnen in eine Hauptförderbahn, Drehtische, aber auch Roboter zum Auslagern von Förderobjekten aus Lagern wie zum Beispiel Regalbediengeräte und autonome Förderfahrzeuge ("Shuttles") und Vertikalförderer wie Lifte und Paternoster. Alle diese Elemente können Förderströme von mehreren eingehenden Fördersegmenten auf einen Knoten konzentrieren. Im Falle von Liften und Paternoster werden Förderströme aus mehreren Ebenen auf einige wenige Förderströme (auf in der Regel niedrigeren Ebenen) konzentriert. Ein Regalbediengerät kann als Fördertechnikelement aufgefasst werden, das Förderströme von vielen Lagerplätzen auf (in der Regel) einen Ausgangsförderstrom konzentriert. Im Rahmen der Erfindung können die Begriffe "Fördertechnikelement" und "Knoten" synonymisch gebraucht werden.

Die "Fördersegmente" können generell auch als logische Fördersegmente gesehen werden und sind nicht unbedingt rein physisch zu betrachten. Beispielsweise kann ein Regalbediengerät als v-zu-w-Multiplexer betrachtet werden, wobei v die Anzahl der vom Regalbediengerät erreichten Lagerplätze angibt und w die Anzahl der vom Regalbediengerät gleichzeitig transportierten Objekte. Obwohl physisch nur ein einziges Regalbediengerät vorhanden ist, so kann dieses dennoch als logischer Knoten betrachtet werden, welcher v eingehende Fördersegmente und w abgehende Fördersegmente aufweist. Es kann auch vorgesehen sein, dass nur ein einziges Fördersegment von einem Knoten wegführt. Dieser Knoten entspricht dann einem v-zu-1-Multiplexer.

Unter einer "Anhalteeinrichtung" sind im Rahmen der Erfindung alle Elemente zum Anhalten eines Förderstroms zu verstehen. Beispielsweise fallen darunter Barrieren die in den Förderstrom eingeschoben oder eingeschwenkt werden können. Unter einer Anhalteeinrichtung können aber auch Förderbänder, Förderketten, Förderrollen und dergleichen verstanden werden, die angehalten werden können (also nicht nur lose gelagert sind). Diese Fördermittel dienen in der Regel sowohl zum Fördern als auch zum Anhalten von Förderobjekten.

Im Rahmen der Erfindung ist es sowohl vorstellbar, dass allen eingehenden Fördersegmenten je eine Anhalteeinrichtung zugeordnet ist als auch, dass nur einem Teil der eingehenden Fördersegmente eines Fördertechnikelements je eine Anhalteeinrichtung zugeordnet ist. Insbesondere kann vorgesehen sein, dass allen eingehenden Fördersegmenten, bis auf eines, je eine Anhalteeinrichtung zugeordnet ist.

Eine "Förderanlage" kann neben den bereits genannten Fördertechnikelementen/Knoten der oben genannten Art beispielsweise auch ein Lager, Regalbediengeräte, Lifte, Paternoster, Förderbänder, Rollenförderer, Kommissionier-Arbeitsplätze und dergleichen aufweisen.

Zur Feststellung der Ist-Position eines Förderobjekts auf einer Förderanlage können beispielsweise Sensoren und Lesegeräte eingesetzt werden, die eine Identifikation eines Förderobjekts ermöglichen. Beispielsweise sind dies Barcode-Lesegeräte, RFID-Lesegeräte (Radio Frequency Identification) sowie Videokameras. Aber auch Sensoren zur Messung einer physikalischen Eigenschaft eines Förderobjekts, wie zum Beispiel für Länge, Gewicht, Farbe und dergleichen, können grundsätzlich als Auslöseeinrichtung dienen, insbesondere wenn mehrere physikalische Eigenschaften gemessen werden, welche zur Identifikation eines Förderobjekts geeignet sind. Zum Beispiel kann dies die Kombination eines bestimmten Wertebereichs einer Objektlänge, eines bestimmten Wertebereichs eines Objektgewichts und eines bestimmten Wertebereichs einer Objektfarbe sein.

"Stromabwärts" bezeichnet im Rahmen der Erfindung generell Orte, welche einem Bezugspunkt in Förderrichtung der Förderobjekte nachfolgen. Ein Förderobjekt erreicht bei seiner Förderung also zeitlich zuerst den genannten Bezugspunkt und danach stromabwärts gelegene Orte beziehungsweise Positionen.

"Stromaufwärts" ist das Gegenteil von "stromabwärts". Ein Förderobjekt erreicht bei seiner Förderung also zeitlich zuerst stromaufwärts gelegene Orte beziehungsweise Positionen und danach den genannten Bezugspunkt.

Die "Förderrichtung" bezeichnet jene Richtung, in der sich die Förderobjekte auf der Förderanlage (im Normalbetrieb) bewegen.

Ein bewegtes Förderobjekt (und insbesondere mehrere bewegte Förderobjekte) bildet/bilden einen "Förderfluss" oder "Förderstrom".

Die Festlegung der Soll-Ankunfts-Zeitpunkte durch die übergeordnete Steuerung erfolgt vorteilhaft kurzfristig vor dem Abarbeiten einer Reihenfolge beziehungsweise Sequenz. Beispielsweise kann die Planung etwa 3-5 Minuten in die Zukunft erfolgen. Ein Ziel ist es dabei, einen Kommissionierarbeitsplatz möglichst konstant mit Förderobjekten zu versorgen, sodass ein Kommissionierer weder auf ein zu kommissionierendes Förderobjekt warten muss, noch dass sich Förderobjekte am Kommissionierarbeitsplatz übermäßig stauen.

Generell sind für die Ablaufplanung zwei Varianten vorstellbar. Einerseits kann die Reihenfolge, in der die Förderobjekte am Kommissionierarbeitsplatz eintreffen, ohne Belang sein, oder es ist seitens der Förderanlage eine bestimmte Reihenfolge der Förderobjekte am Kommissionierarbeitsplatz einzuhalten beziehungsweise sicherzustellen. Bei der ersten Variante wird für alle Förderobjekte einer Gruppe, innerhalb der die Reihenfolge der Förderobjekte egal ist, derselbe Soll-Ankunfts-Zeitpunkt für alle diese Förderobjekte vorgegeben. Dagegen unterscheiden sich die Soll-Ankunfts-Zeitpunkte der Förderobjekte bei der zweiten Variante voneinander. Vorteilhaft entspricht die Differenz der Soll-Ankunfts-Zeitpunkte zweier aufeinanderfolgender Förderobjekte der Bearbeitungszeit (Pickzeit) des rangniedrigeren, also früheren, Förderobjekts. Das heißt der Soll-Ankunfts-Zeitpunkt eines Förderobjekts n+1 entspricht dem Soll-Ankunfts-Zeitpunkt des vorhergehenden Förderobjekts n plus der für das Förderobjekt n nötigen Bearbeitungszeit (Pickzeit). Die Bearbeitungszeit für eine Type eines Förderobjekts, also beispielsweise die Zeit, die für das Entnehmen einer Konservendose aus einem angedienten Ladehilfsmittel und das Ablegen der Konservendose in einem Versandbehälter benötigt wird, kann beispielsweise empirisch ermittelt werden oder auf Erfahrungen beruhen. Insbesondere können dazu real vorgenommene Vorgänge protokoliert und statistisch ausgewertet werden. Die Soll-Ankunfts-Zeitpunkte sind natürlich auch dadurch beeinflusst, wann ein Auftrag fertig kommissioniert sein soll. Beispielsweise kann berücksichtigt werden, wann ein Lastkraftwagen voraussichtlich oder geplant fertig kommissionierte Versandbehälter an einer Laderampe übernehmen soll. Der letzte Soll-Ankunfts-Zeitpunkt eines Förderobjektes an einem Kommissionierarbeitsplatz liegt demgemäß zumindest soweit vor dem Zeitpunkt des Verladens der Versandbehälter in den Lastkraftwagen, dass diese vom Kommissionierarbeitsplatz an die Laderampe transportiert und für den Transport vorbereitet werden können. Auf diese Weise ist es dem übergeordneten Rechner möglich, Soll-Ankunfts-Zeitpunkte für die Förderobjekte festzulegen. Die oben genannten Kriterien sind natürlich rein beispielhaft und dienen lediglich der Illustration des vorgeschlagenen Verfahrens. Selbstverständlich können zusätzlich oder alternativ auch andere Kriterien für die Planung herangezogen werden.

Ähnliches wie für die Soll-Ankunfts-Zeitpunkte gilt für die Durchlaufzeiten eines Förderobjekts durch die Förderanlage, beispielsweise von einem bestimmten Lagerplatz zu einem bestimmten Ziel. Diese Durchlaufzeiten hängen vom Aufbau der Förderanlage und auch vom "Verkehrsaufkommen" auf derselben ab und können beispielsweise bereits im Planungsstadium durch Simulation ermittelt werden. Eine weitere Möglichkeit stellen empirische Versuche in einem Probebetrieb dar. Schließlich können auch real vorkommende Ist-Durchlaufzeiten protokolliert und für die Anpassung der jeweiligen Soll-Durchlaufzeiten an die Realität herangezogen werden. Dabei können beispielsweise statistische Auswertungen und adaptive Algorithmen an sich bekannter Art zu Hilfe genommen werden. Beispielsweise können die Ankunftszeiten eines Förderobjekts an verschiedenen Orten in der Förderanlage ermittelt beziehungsweise dokumentiert und im Anschluss ausgewertet werden. Im Grunde reicht aber die Auswertung der Ist-Durchlaufzeit vom Startpunkt (z.B. vom Lager) bis zum Zielzeitpunkt (z.B. bis zum Kommissionierarbeitsplatz) aus.

Vorteilhaft wird der Weg durch die Förderanlage durch den übergeordneten Rechner vorgegeben, wobei Rückmeldungen der Förderanlage über gestörte Fördersegmente berücksichtigt werden können. Beispielsweise werden Fördersegmente, die ausgefallen sind und über die keine Förderobjekte gefördert werden können, in der Planung ausgelassen. Ein Ziel bei der Planung kann größtmöglicher Durchsatz beziehungsweise geringstmögliche Durchlaufzeit durch die Förderanlage sein. Das Verkehrsaufkommen an den einzelnen Knoten kann in der Planung des Wegs durch die Förderanlage berücksichtigt werden, vorteilhaft wird bei der Planung aber nur das Ziel betrachtet, und das aktuelle Verkehrsaufkommen an den einzelnen Knoten bleibt unberücksichtigt. Das heißt, für den übergeordneten Rechner steht in einer vorteilhaften Variante des vorgeschlagenen Verfahrens bei der Planung einzig und allein die optimale Versorgung der Kommissionierarbeitsplätze im Fokus. Die Umsetzung des Planes obliegt dann den Fördertechnikelementen/Knoten in der Förderanlage, welche Förderobjekte autark durch die Förderanlage leiten.

Bei der Planung des Förderflusses in der Förderanlage können unerwartete Ereignisse dahingehend berücksichtigt werden, dass Förderobjekte zwar später am Kommissionierarbeitsplatz eintreffen können, jedoch nicht früher, um einen unerwünschten Stau aktuell nicht benötigter Förderobjekte am Kommissionierarbeitsplatz zu vermeiden. Beispielsweise kann dies dadurch erfolgen, dass der übergeordnete Rechner die kürzeste aus Simulationen, Versuchen und/oder Erfahrungen bekannte Durchlaufzeit von demjenigen Startpunkt zu demjenigen Zielpunkt für die Planung heranzieht, von und zu dem das Förderobjekt zu transportieren ist. Dass das Förderobjekt weniger lange braucht als die bisher bekannte minimale Durchlaufzeit ist unwahrscheinlich, sodass sich die realen Ist-Ankunftszeitpunkte automatisch nach hinten verschieben. Ist das Förderobjekt trotzdem unerwartet schneller, so kann die neue Durchlaufzeit für die nachfolgende Planung an die Stelle der bisherigen minimalen Durchlaufzeit treten. Eine Synchronisierung eines verspäteten Förderobjekts mit einem zugeordneten Versandbehälter kann automatisch durch die Förderanlage erfolgen, beispielsweise indem die Förderanlage automatisch den jeweils zu einem Förderobjekt passenden Versandbehälter am Kommissionierarbeitsplatz andient.

Generell sinkt mit der Genauigkeit der Planung der Bedarf an Korrekturen beziehungsweise Nachjustierungen. In einer Variante des vorgeschlagenen Verfahrens werden aber Fehler in einer Sortierreihenfolge zugunsten einer vereinfachten Planung und/oder zugunsten eines erhöhten Durchsatzes bewusst zugelassen. Diese Sortierfehler werden dann am Kommissionierarbeitsplatz behoben. Beispielsweise kann wiederum vorgesehen sein, dass die Förderanlage automatisch den jeweils zu einem Förderobjekt passenden Versandbehälter am Kommissionierarbeitsplatz andient.

In einer Variante des vorgeschlagenen Verfahrens werden an einem Kommissionierarbeitsplatz mehrere Aufträge gleichzeitig bearbeitet. Daher kann vorgesehen sein, dass die Förderobjekte eines Auftrags zwar zwingend in einer vorgegebenen Reihenfolge am Kommissionierarbeitsplatz eintreffen, die Reihenfolge der Aufträge innerhalb einer Gruppe von Aufträgen aber unberücksichtigt bleibt. Das heißt, es ist unerheblich ob Förderobjekte eines zweiten Auftrags Förderobjekten eines ersten Auftrags folgen, oder ob Förderobjekte des zweiten Auftrags vor Förderobjekten des ersten Auftrags am Kommissionierarbeitsplatz eintreffen. Dadurch ist die Flexibilität bei der Ablaufplanung durch die übergeordnete Steuerung wesentlich höher als bei Verfahren, bei denen auch die Aufträge sortiert an einem Kommissionierarbeitsplatz eintreffen müssen. Es ist andererseits auch möglich, innerhalb eines Auftrags Sortierfehler zuzulassen, um die Planungsflexibilität noch weiter zu steigern. In einer Ausführungsvariante des vorgeschlagenen Verfahrens unterscheidet der übergeordnete Rechner auch nicht zwischen mehreren Zielen, selbst wenn diese real vorhanden sind. Für die Planung ist in diesem Fall hauptsächlich entscheidend, wann die Förderobjekte im Kommissionierbereich, der mehrere Kommissionierarbeitsplätze umfassen kann, eintreffen sollen. Die Aufteilung der Förderobjekte auf die einzelnen Kommissionierarbeitsplätze wird dann autark von den Fördertechnikelementen/Knoten der Förderanlage übernommen.

Denkbar ist auch, dass die Ist-Durchlaufzeiten der Förderobjekte durch die Förderanlage überwacht werden und ein Alarm ausgegeben wird und/oder Korrekturmaßnahmen ergriffen werden, wenn die Ist-Durchlaufzeit einen vorgebbaren Schwellwert überschreitet, insbesondere einen weg-spezifischen Schwellwert, der dem Weg, über den das jeweilige Förderobjekt durch die Förderanlage gefördert wurde, zugeordnet ist. Denkbar ist natürlich auch die Anwendung eines Start-Ziel-spezifischen Schwellwerts, der dem Startpunkt und dem Zielpunkt des Förderobjektes zugeordnet ist, oder Schwellwerte, die auf anderen Kriterien beruhen. Eine Maßnahme zur Verringerung der Durchlaufzeiten kann sein, die Soll-Ankunftszeitpunkte weiter in die Zukunft zu legen, als dies eigentlich für die Versorgung des Kommissionierarbeitsplatzes mit Förderobjekten erforderlich wäre. Das heißt die Frequenz der am Kommissionierarbeitsplatz ankommenden Förderobjekte sinkt, und damit sinkt auch die Frequenz und die Anzahl der über die Förderanlage geförderten Förderobjekte. Damit wird auch die Belastung der Förderanlage verringert, und die Ist-Durchlaufzeiten verkürzen sich.

Die Regler beziehungsweise Regelalgorithmen, die zur Regelung der Versorgung der Kommissionierarbeitsplätze und auch zur Vermeidung einer Überlastung der Förderanlage eingesetzt werden, können generell Bestandteil des übergeordneten Rechners sein oder dort in einer Software abgebildet sein. Beispielsweise kann ein Proportionalregler vorgesehen sein, dessen Regelgröße die Anzahl der an einem Kommissionierarbeitsplatz wartenden Förderobjekte oder die Frequenz der an einem Kommissionierarbeitsplatz eintreffenden Förderobjekte und dessen Stellgröße die Soll-Ankunftszeit eines Förderobjektes an diesem Kommissionierarbeitsplatz ist. Insbesondere können auch mehrere verschachtelte Regler an der Regelung des Förderflusses durch die Förderanlage beteiligt sein. Im Speziellen ist die Regelgröße mehrerer oder aller Regler die Anzahl der an einem Kommissionierarbeitsplatz wartenden Förderobjekte oder die Frequenz der an einem Kommissionierarbeitsplatz eintreffenden Förderobjekte.

Vorteilhafte Ausgestaltungen und Weiterbildungen der Erfindung ergeben sich nun im Folgenden aus den Unteransprüchen sowie aus der Beschreibung in Zusammenschau mit den Figuren.

Besonders vorteilhaft ist es, wenn ein an einem Fördertechnikelement/Knoten wartendes erstes Förderobjekt nach einem zweiten Förderobjekt mit einem weiter in der Zukunft liegenden Soll-Ankunfts-Zeitpunkt freigegeben wird, wenn die Soll-Durchlaufzeit für das zweite Förderobjekt länger ist als für das erste Förderobjekt. Dadurch wird die dem Fördertechnikelement/Knoten nachfolgende Förderstrecke durch die beiden Förderobjekte nur relativ kurz belegt, jedenfalls kürzer als bei einer Freigabe des ersten Förderobjekts vor dem zweiten Förderobjekt.

Besonders vorteilhaft ist es aber auch, wenn ein an einem Fördertechnikelement/Knoten wartendes erstes Förderobjekt vor einem zweiten Förderobjekt mit einem weiter in der Zukunft liegenden Soll-Ankunfts-Zeitpunkt freigegeben wird, wenn die Soll-Durchlaufzeit für das zweite Förderobjekt länger ist als für das erste Förderobjekt und das erste Förderobjekt dadurch vor einem dritten Förderobjekt, dessen Soll-Ankunfts-Zeitpunkt nach dem Soll-Ankunfts-Zeitpunkt des zweiten Förderobjekt liegt, am Ziel ankommt. Durch Wahl von aufeinanderfolgenden Zielzeitpunkten kann generell eine Sequenz von Förderobjekten hergestellt werden. In der Realität ist diese aber nicht immer unbedingt erzielbar, beispielsweise wenn Störungen auf der Förderanlage auftreten, welche das erste und zweite Förderobjekt ungewollt verzögern. Durch die vorgeschlagenen Maßnahmen kann die Anzahl der Sortierfehler in so einem Fall gering gehalten werden. Jedenfalls entstehen dadurch weniger Sortierfehler als bei einer Freigabe des ersten Förderobjekts nach dem zweiten Förderobjekt.

In einer besonders vorteilhaften Ausgestaltung des vorgestellten Verfahrens werden vor der Auslagerung von Förderobjekten mehrere Varianten von jeweils eine vorgegebene Sortierreihenfolge einhaltenden Soll-Ankunfts-Zeitpunkten für mehrere Förderobjekte und insbesondere mehrere Ziele berechnet, und es wird jene Variante tatsächlich ausgeführt, welche die geringste Belegungszeit der Förderanlage verursacht. Dadurch wird der Durchsatz auf der Förderanlage optimiert, und die Förderanlage kann optimal genutzt werden. Beispielsweise kann eine Startvariante, welche eine vorgegebene Sortierreihenfolge mehrerer Förderobjekte erfüllt, zufällig gewählt werden. Sodann werden durch Veränderung des Förderablaufs weitere Varianten gewählt, welche die genannte Sortierreihenfolge sicherstellen. Ist eine dieser nachfolgenden Varianten besser als die Startvariante, das heißt bewirkt sie dieselbe Sortierreihenfolge in kürzerer Zeit, so wird in Folge diese nachfolgende Variante als Referenz herangezogen. Durch rekursive Mutationen des Förderablaufs können sukzessive immer bessere, das heißt schnellere, Varianten ermittelt werden. Die Simulation kann beispielsweise nach einer vorgegebenen Zeit abgebrochen werden oder beispielsweise auch dann, wenn sich nach einer vorgegebenen Zeit keine Besserung mehr einstellt und davon ausgegangen wird, dass zumindest ein lokales Optimum aufgefunden wurde.

Unter der "Belegungszeit der Förderanlage" wird im Rahmen der Erfindung insbesondere jene Zeit verstanden, welche von der Auslagerung eines ersten Förderobjekts eines Auftrags oder mehrerer Aufträge bis zur Ankunft des letzten Förderobjekts dieses Auftrags oder dieser Aufträge an seinem Ziel vergeht. Generell kann ein Auftrag ein Förderobjekt oder mehrere Förderobjekte umfassen und einem Ziel oder mehreren Zielen zugeordnet sein.

Besonders vorteilhaft ist es weiterhin, wenn ein Förderobjekt in einen Puffer, einen Sequenzer, eine Ausweichstrecke oder eine Rückkopplung gefördert wird und dort angehalten wird, bis diese Position von einem dem betreffenden Förderobjekt in der Sortierreihenfolge vorangehenden Förderobjekt passiert wurde, wenn dies zu einer Verringerung der Belegungszeit der Förderanlage und/oder Schieflasten auf der Förderanlage führt. Bei dieser Variante des vorgestellten Verfahrens können also Fehler in einer Sortierreihenfolge bewusst zugelassen und zu einem späteren Zeitpunkt wieder korrigiert werden, um auf diese Weise die Förderanlage optimal auszunutzen. Dadurch ist zwar eine Vertauschung innerhalb der gebildeten Ist-Reihenfolge und damit einhergehend eine Abweichung von der Soll-Reihenfolge möglich, allerdings sinkt damit auch die Anzahl an Blockaden in der Förderanlage, und es steigt der Durchsatz. Gegebenenfalls können die Förderobjekte vor Erreichen des Ziels noch eine Sortierstufe durchlaufen, um eine exakte Ist-Reihenfolge zu erreichen. Durch die Vorsortierung kann diese Sortierstufe jedoch klein gehalten werden und benötigt daher nur wenig Bauraum.

Schieflasten sind allgemein dadurch charakterisiert, dass Teile der Förderanlage sehr stark respektive übermäßig belastet sind. Auch wenn andere Teile nur wenig belastet sind und diese gering belasteten Teile die Mehrheit bilden, kann der Gesamtdurchsatz durch die Förderanlage aufgrund einer Schieflast stark zurückgehen. Daher wird in der Regel eine Gleichlast auf der Förderanlage beziehungsweise eine gleichmäßige Auslastung der Förderanlage angestrebt. Die oben genannte Verfahrensvariante kann dazu beitragen, einen hohen Grad der Gleichlast zu erzielen.

Denkbar ist aber auch, dass ein zweites Förderobjekt, welches einem ersten Förderobjekt in einer Soll-Sortierreihenfolge folgt, in einen Puffer, einen Sequenzer, eine Ausweichstrecke oder eine Rückkopplung gefördert wird und dort angehalten wird, bis diese Position vom ersten Förderobjekt passiert wurde, wenn das erste Förderobjekt auf der Förderanlage außerplanmäßig respektive ungeplant verzögert wurde und kein Soll-Ankunfts-Zeitpunkt mehr vor dem Soll-Ankunfts-Zeitpunkt des zweiten Förderobjekts ohne Nutzung des Puffers, des Sequenzers, der Ausweichstrecke oder der Rückkopplung mehr möglich ist. Durch die vorgeschlagenen Maßnahmen können nun auch Sortierfehler behoben werden, die ungeplant aufgetreten sind. Beispielsweise können solche ungeplanten Sortierfehler durch eine Störung auf der Förderanlage hervorgerufen werden.

An dieser Stelle wird angemerkt, dass die erläuterte Freigabe von Förderobjekten, welche zu einem temporären Fehler in der Sortierreihenfolge führt, respektive die Behebung geplanter als auch ungeplanter Sortierfehler auch ohne die Merkmale der Patentansprüche 1 bis 8 und 19, das heißt auch ohne die offenbarte Zeitsteuerung anwendbar ist. Darüber hinaus kann der zu einem temporären Fehler in der Sortierreihenfolge führenden Freigabe von Förderobjekten respektive der Behebung von Sortierfehlern auch ein anderer Sortieralgorithmus übergeordnet werden.

Unter einem "Puffer" ist im Rahmen der Erfindung ein Element der Fördertechnik zur temporären Aufnahme eines Förderobjekts oder mehrerer Förderobjekte zu verstehen. Das Ausschleusen aus dem Puffer erfolgt je nach Bauart und Belegung nicht zwangsläufig wahlfrei.

Ein "Sequenzer" ist ein Spezialfall eines Puffers mit wahlfreiem Zugriff. Das heißt, dass jedes beliebige im Sequenzer zwischengelagerte Förderobjekt unabhängig von anderen zwischengelagerten Förderobjekten in einen Förderstrom eingeschleust werden kann.

Unter einer "Ausweichstrecke" kann ein teilweise parallel geführter Förderstrom verstanden werden.

Bei einer "Rückkopplung" sind schließlich Eingänge und Ausgänge wenigstens zweier Fördertechnikelemente/Knoten direkt oder indirekt wechselseitig miteinander verbunden. "Direkt" bedeutet in obigem Zusammenhang, dass die Ankopplung für ein abgehendes Fördersegment des einen Fördertechnikelements ohne Zwischenschaltung anderer Elemente mit einem eingehenden Fördersegment eines anderen Fördertechnikelements verbunden ist, "indirekt" das Gegenteil.

Ein gemeinsames Element von Puffer, Sequenzer, Ausweichstrecke und Rückkopplung ist eine Auffächerung oder Aufteilung des Förderstroms. Ein entsprechendes Fördertechnikelement / entsprechender Knoten weist daher mehrere abgehende Fördersegmente auf. Ein weiterer Grund für eine Auffächerung/Aufteilung des Förderstroms kann dadurch gegeben sein, dass ein abgehender Förderstrom in verschiedene Bereiche einer Förderanlage beziehungsweise zu verschiedenen Zielen (insbesondere zu Kommissionier-Arbeitsplätzen oder Pack-Arbeitsplätzen) geleitet wird.

Besonders vorteilhaft ist es auch, wenn die Soll-Ankunfts-Zeitpunkte für jene Förderobjekte, welche noch nicht an ihrem Ziel eingetroffen sind unter Berücksichtigung der genannten außerplanmäßigen/ungeplanten Verzögerung neu berechnet werden. Dadurch wird die weitere Planung des Förderablaufs auf belastbare Fakten gestützt, wodurch die Wahrscheinlichkeit für einen weiteren fehlerfreien Ablauf erhöht wird.

Besonders vorteilhaft ist es in diesem Zusammenhang, wenn mehrere Varianten von jeweils eine vorgegebene Sortierreihenfolge einhaltenden Soll-Ankunfts-Zeitpunkten für mehrere Förderobjekte, welche noch nicht an ihrem Ziel eingetroffen sind, unter Berücksichtigung der genannten außerplanmäßigen/ungeplanten Verzögerung berechnet werden und jene Variante tatsächlich ausgeführt wird, welche die geringste Belegungszeit der Förderanlage verursacht. Dadurch kann der weitere Förderablauf optimiert werden.

Günstig ist es, wenn die Fördertechnikelemente/Knoten auf eine gemeinsame Tabelle der Soll-Ankunfts-Zeitpunkte zugreifen. Gegebenenfalls kann die gemeinsame Tabelle auch die Soll-Ankunfts-Zeitpunkte und die Soll-Durchlaufzeiten enthalten oder auch die Soll-Freigabe-Zeitpunkte. Dadurch liegen den Fördertechnikelementen/Knoten jeweils aktuelle Informationen über die Position und Abfolge der Förderobjekte vor. Sind die Steuerungen der Fördertechnikelemente/Knoten durch mehrere Instanzen eines Software-Algorithmus in einem Computer realisiert, dann kann die gemeinsame Tabelle der Soll-Ankunfts-Zeitpunkte / Soll-Durchlaufzeiten / Soll-Freigabe-Zeitpunkte insbesondere auf diesem Computer gespeichert sein.

In einer weiteren vorteilhaften Variante des Verfahrens treffen mehrere Förderobjekte zum selben Soll-Ankunfts-Zeitpunkt planmäßig an einem Zielort ein, beziehungsweise weisen mehrere Förderobjekte die gleiche Ordnungsnummer in einer Sortierreihenfolge auf. Auf diese Weise ist es möglich, mehrere in einer Sortierreihenfolge angeordnete Gruppen von Förderobjekten zu bilden, innerhalb derer die Förderobjekte jedoch ungeordnet angeordnet sein können. Das heißt, die Förderobjekte haben eine nicht notwendigerweise eindeutige Ordnungsnummer. Beispielsweise kann die Sortierreihenfolge mehrere Förderobjekte mit der Ordnungsnummer 3 aufweisen. Diese Förderobjekte werden durch das vorgestellte Verfahren nach der Gruppe 2 aber vor der Gruppe 4 angeordnet. Innerhalb der Gruppe 3 ist die Anordnung der Förderobjekte jedoch beliebig. Diese Vorgangsweise ist etwa dann zweckmäßig, wenn mehrere gleichartige Objekte (z.B. Wasserflaschen) in einem Förderstrom an einer bestimmten Position gruppiert werden sollen, die Position eines bestimmten Objekts innerhalb dieser Gruppe aber gleichgültig ist.

Besonders vorteilhaft ist es, wenn zumindest jene Verfahrensschritte, welche einer Entscheidung über eine Freigabe eines Förderobjekts zugeordnet sind, bis auf die Berücksichtigung eines Soll-Ankunfts-Zeitpunkts / einer Soll-Durchlaufzeit / eines Soll-Freigabe-Zeitpunkts unabhängig von allen anderen Fördertechnikelementen/Knoten und/oder unabhängig von einer zentralen Steuerung ausgeführt werden. Dadurch kann die Kommunikation und damit der Aufwand für Kommunikationsleitungen zwischen Fördertechnikelementen gering gehalten werden.

Besonders vorteilhaft ist es auch, wenn eine Programmlogik im Hinblick auf die Freigabe eines Förderobjekts in allen Fördertechnikelementen/Knoten identisch aufgebaut ist, beziehungsweise wenn die Verfahrensschritte im Hinblick auf die Freigabe eines Förderobjekts in allen Fördertechnikelementen/Knoten in identischer Weise ausgeführt werden. Auf diese Weise kann der Aufwand für die Herstellung beziehungsweise Programmierung der Steuerung für eine Förderanlage insgesamt gering gehalten werden, da diese aus mehreren identischen Modulen aufgebaut ist. Auch der Aufwand für eine eventuelle Fehlersuche kann dadurch klein gehalten werden.

Günstig ist darüber hinaus auch ein Verfahren zum Betrieb einer Förderanlage der genannten Art mit einem vorgelagerten Lager mit Lagerplätzen für Förderobjekte, wobei das Fördertechnikelement als Auslagerungsroboter für das Lager ausgebildet ist. Wie bereits erwähnt können solche Roboter, welche zum Beispiel als Regalbediengeräte, autonome Förderfahrzeuge ("Shuttle"), Lifte oder Paternoster ausgebildet sind, Förderströme von mehreren eingehenden Fördersegmenten auf einen Knoten konzentrieren. Beispielsweise kann ein Regalbediengerät als v-zu-w-Multiplexer betrachtet werden, wobei v die Anzahl der vom Regalbediengerät erreichten Lagerplätze angibt und w die Anzahl der vom Regalbediengerät gleichzeitig transportierten Objekte.

Vorteilhaft ist auch ein Verfahren zum Betrieb einer Förderanlage der genannten Art mit einem vorgelagerten Lager mit Lagerplätzen für Förderobjekte, bei dem Förderobjekte im Hinblick auf die Ziele und in Bezug auf eine Sortierreihenfolge für ein zu versorgendes Ziel geordnet ausgelagert werden. Das bedeutet, dass zuerst Förderobjekte für das Ziel mit der niedrigsten Position in einer Reihenfolge ausgelagert werden, dann die Förderobjekte mit der zweitniedrigsten Position usw. Zudem werden die Förderobjekte für ein bestimmtes Ziel ebenfalls geordnet ausgelagert. Befinden sich in dem Lager, aus dem mit Hilfe eines Fördertechnikelements ausgelagert wird, zum Beispiel die Förderobjekte 3 und 5 des Ziels A und die Förderobjekte 1 und 7 des Ziels B, so werden die Förderobjekte in der Reihenfolge A3, A5, B1, B7 ausgelagert. Bei diesem Beispiel wird angenommen, dass sich die in der Reihenfolge fehlenden Förderobjekte (also z.B. A1, A2, A4, B2, B3, usw.) in anderen Lagern befinden, die von anderen Fördertechnikelementen ausgelagert werden. Auf diese Weise kann insgesamt ein hoher Ordnungsgrad der auf der Fördertechnik vorhandenen Förderströme erzielt werden.

Vorteilhaft ist es aber auch, wenn Förderobjekte in Bezug auf eine Sortierreihenfolge für ein zu versorgendes Ziel geordnet, im Hinblick auf die Ziele jedoch chaotisch beziehungsweise nicht notwendigerweise geordnet aus dem Lager ausgelagert werden. Bezogen auf das zuvor genannte Beispiel bedeutet dies, dass die Förderobjekte beispielsweise auch in der Reihenfolge B1, A3, A5, B7 oder beispielsweise auch in der Reihenfolge B1, A3, B7, A5 ausgelagert werden können. Durch die ungeordnete Auslagerung auf Zielebene kann der Durchsatz bei der Auslagerung erhöht werden, beispielsweise wenn bei der Auslagerung Transportwege minimiert werden.

Günstig ist es weiterhin, wenn wenigstens zwei Fördertechnikelemente direkt oder indirekt ringförmig miteinander verbunden sind, beziehungsweise wenn wenigstens ein Teilförderstrom ringförmig über die genannten Fördertechnikelemente geführt wird. Mit anderen Worten wird in dem Netz verbundener Fördertechnikelemente eine Rückkopplung vorgesehen. Dazu wird wenigstens ein abgehendes Fördersegment wenigstens eines Fördertechnikelements mit wenigstens einem eingehenden Fördersegment wenigstens eines anderen, stromaufwärts angeordneten Fördertechnikelements verbunden. Auf diese Weise kann der Ordnungsgrad der transportierten Förderobjekte in mehreren Durchläufen erhöht werden, beziehungsweise können Lücken in der Reihenfolge schrittweise aufgefüllt werden.

An dieser Stelle wird angemerkt, dass die Begriffe "stromabwärts" und "stromaufwärts" in Bezug auf einen ringförmigen Teilstrom synonymisch gebraucht werden können.

In einer weiteren vorteilhaften Variante des Verfahrens werden die Freigaben pro Zeiteinheit von einer übergeordneten Steuerung überwacht, und es wird jene Anhalteeinrichtung freigegeben, an welcher das Förderobjekt mit der niedrigsten Ordnungsnummer wartet, wenn für die Freigaben pro Zeiteinheit ein Schwellwert unterschritten wird. Dadurch wird vermieden, dass es auf der Förderanlage durch eine ungünstige Anordnung der Förderobjekte zu längerfristigen Blockade kommt. Anstatt das Förderobjekt mit der niedrigsten Ordnungsnummer freizugeben, kann eine Freigabe beispielsweise auch chaotisch beziehungsweise zufällig erfolgen. Vorteilhaft wird diese Variante des Verfahrens mit einem/einer dem Knoten stromabwärts nachgelagerten Puffer, Sequenzer, Ausweichstrecke oder Rückkopplung oder Auffächerung im Förderstrom kombiniert, um den gewünschten Ordnungsgrad der auf der Förderanlage transportierten Förderobjekte wieder herzustellen. Vorteilhaft ist es auch, wenn der Schwellwert entsprechend der Anzahl der auf der Förderanlage befindlichen Objekte adaptiert wird. Das heißt, dass der Schwellwert erhöht wird, wenn die Anzahl der transportierten Objekte steigt und umgekehrt. Damit wird vermieden, dass eine sinkende Anzahl von Freigaben, welche durch eine geringe Anzahl an transportierten Förderobjekten begründet ist, als Blockade fehlinterpretiert wird. Beispielsweise kann so ein Zustand beim Starten eines Kommissionierauftrags eintreten oder beispielsweise auch wenn dieser nahezu abgearbeitet ist. In beiden Fällen befinden sich vergleichsweise wenige Objekte auf der Förderanlage weil sie eben zur Mehrzahl noch im Lager oder bereits in Versandbehälter verladen sind. Vorteilhaft ist es auch, wenn ein Pausieren der Entnahme der Förderobjekte an einem Ziel berücksichtigt wird. Insbesondere beim manuellen Kommissionieren kommt es zu zwangsläufigen Unterbrechungen des Arbeitsablaufs, beispielsweise wenn ein Arbeiter seine Pause antritt oder die Toilette aufsucht. In diesem Fall kann es ebenfalls zu einem Rückgang der Freigaben pro Zeiteinheit kommen, der nicht durch eine Blockade begründet ist.

In einer weiteren vorteilhaften Variante des Verfahrens werden die Freigaben pro Zeiteinheit je zu versorgendem Ziel von einer übergeordneten Steuerung überwacht, und es wird jene Anhalteeinrichtung freigegeben, an welcher das Förderobjekt mit dem niedrigsten Soll-Ankunfts-Zeitpunkt des betreffenden Ziels wartet, wenn für die dem betreffenden Ziel zugeordneten Freigaben pro Zeiteinheit ein Schwellwert unterschritten wird. Das zu der zuvor offenbarten Variante Gesagte gilt sinngemäß auch für diese Variante. Im Unterschied werden die Freigaben aber nicht global betrachtet, sondern gesondert je Ziel.

An dieser Stelle wird angemerkt, dass sich die zum erfindungsgemäßen Verfahren offenbarten Varianten und die daraus resultierenden Vorteile sinngemäß auf das erfindungsgemäße Fördertechnikelement respektive die erfindungsgemäße Förderanlage beziehen und umgekehrt.

Zum besseren Verständnis der Erfindung wird diese anhand der nachfolgenden Figuren näher erläutert.

Es zeigen jeweils in stark vereinfachter, schematischer Darstellung:
- Fig. 1: ein erstes schematisch dargestelltes Beispiel eines Fördertechnikelements/Knotens;
- Fig. 2: wie Fig. 1, jedoch mit Sensoren / Leseeinrichtungen in den eingehenden Fördersegmenten;
- Fig. 3: ein schematisch dargestelltes Lager und Regalbediengerät in Schrägansicht;
- Fig. 4: das Lager aus Fig. 3 in Vorderansicht;
- Fig. 5: eine logische Repräsentation des Regalbediengeräts aus Fig. 3;
- Fig. 6: eine logische Repräsentation eines Regalbediengeräts, welches mehrere Förderobjekte gleichzeitig aufnehmen kann;
- Fig. 7: ein Lager mit einem daran angeschlossenen Lift und mit darin autonom fahrenden Förderfahrzeugen;
- Fig. 8: eine logische Repräsentation der Anordnung aus Fig. 7;
- Fig. 9: wie Fig. 7, nur mit einem Paternoster anstelle des Lifts;
- Fig. 10: eine logische Repräsentation der Anordnung aus Fig. 9;
- Fig. 11: ein Beispiel einer etwas komplexeren Förderanlage;
- Fig. 12: ein weiteres Beispiel einer etwas komplexeren Förderanlage, jedoch ohne Rücckopplung und Sortierstufe;
- Fig. 13: ähnlich wie Fig. 12, jedoch mit zusätzlichen Ausweichstrecken;
- Fig. 14: ein Weg-Zeit-Diagramm für ein erstes Förderobjekt;
- Fig. 15: ein Weg-Zeit-Diagramm für ein weiteres Förderobjekt;
- Fig. 16: ein Weg-Zeit-Diagramm für noch ein weiteres Förderobjekt;
- Fig. 17: ein Weg-Zeit-Diagramm für unterschiedlich schnelle Förderobjekte;
- Fig. 18: die physische Anordnung einiger Förderobjekte an einem ersten Knoten zu einem ersten Zeitpunkt, sowie deren zugeordnete Soll-Ankunfts-Zeitpunkte;
- Fig. 19: wie Fig. 18, jedoch nach der Weiterleitung eines Förderobjekts;
- Fig. 20: die physische Anordnung einiger Förderobjekte an einem zweiten Knoten zu einem zweiten Zeitpunkt, sowie deren zugeordnete Soll-Ankunfts-Zeitpunkte;
- Fig. 21: wie Fig. 20, jedoch nach der Weiterleitung eines Förderobjekts;
- Fig. 22: die physische Anordnung einiger Förderobjekte an einem dritten Knoten zu einem dritten Zeitpunkt, sowie deren zugeordnete Soll-Ankunfts-Zeitpunkte;
- Fig. 23: wie Fig. 22, jedoch nach der Weiterleitung der Förderobjekte;
- Fig. 24: ähnlich wie Fig. 23, jedoch mit einem Sortierfehler;
- Fig. 25: die physische Anordnung einiger Förderobjekte in einem Zustand, in dem das einen Fehler in einer Sortierreihenfolge verursachende Förderobjekt in eine Ausweichstrecke transportiert wurde;
- Fig. 26: wie Fig. 25, jedoch nach Weiterleitung einiger Förderobjekte;
- Fig. 27: wie Fig. 25, jedoch nach Weiterleitung aller Förderobjekte;
- Fig. 28: ein Beispiel einer physischen Anordnung mehrerer Förderobjekte mit teilweise gleicher Ordnungsnummer beziehungsweise Soll-Ankunftszeit;
- Fig. 29: ähnlich wie Fig. 1, jedoch mit einer nach einem anderen Sortierverfahren arbeitenden Steuerung und
- Fig. 30: ähnlich wie Fig. 11, jedoch mit Fördertechnikelementen/Knoten entsprechend Fig. 19.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

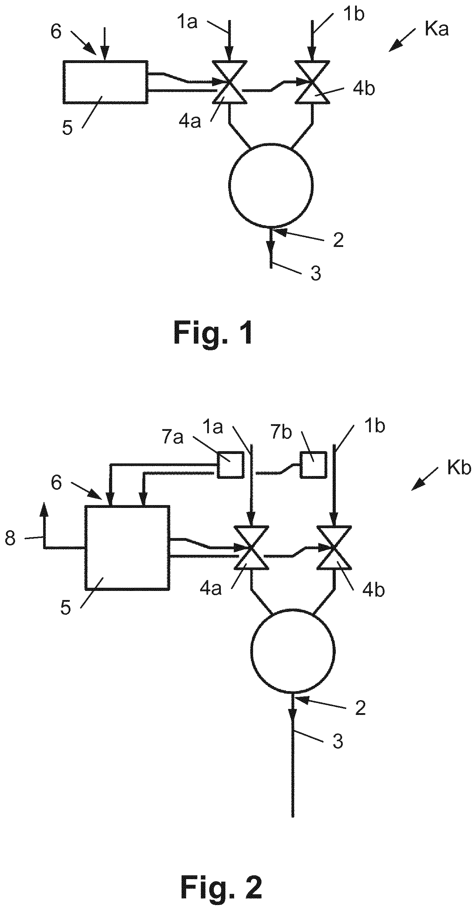

Fig. 1 zeigt ein erstes Beispiel eines Fördertechnikelements Ka zum Bündeln von Förderströmen. Das Fördertechnikelement Ka umfasst zwei eingehende Fördersegmente 1a, 1b, eine Ankopplung 2 für ein abgehendes Fördersegment 3, auf das die eingehenden Fördersegmente 1a, 1b zusammengeführt werden, und mehrere Anhalteeinrichtungen 4a, 4b zum Anhalten eines Förderflusses auf den eingehenden Fördersegmenten 1a, 1b. Wegen der genannten Zusammenführung kann das Fördertechnikelement Ka auch als Knoten aufgefasst werden. Zudem umfasst das Fördertechnikelement Ka eine Steuerung 5, welche ausgangsseitig mit den genannten Anhalteeinrichtungen 4a, 4b verbunden ist. An einem Eingang 6 ist die Steuerung 5 optional mit einer übergeordneten zentralen Steuerung verbunden, so wie dies in der Fig. 1 mit einem eingangsseitigen Pfeil dargestellt ist.

In dem in Fig. 1 dargestellten Beispiel sind lediglich zwei eingehende Fördersegmente 1a, 1b vorgesehen. Denkbar ist natürlich auch, dass mehr als zwei eingehende Fördersegmente 1a, 1b vorgesehen sind. Desgleichen ist es vorstellbar, dass abweichend von der Darstellung der Fig. 1 mehr als eine Ankopplung 2 und mehr als ein abgehendes Fördersegment 3 vorgesehen sind. Denkbar ist auch, dass die Steuerung 5 weitere Eingänge für die Verarbeitung von Signalen weiterer Steuerungen aufweist, insbesondere von weiteren Steuerungen 5 weiterer Knoten K.

An dieser Stelle wird auch angemerkt, dass es sich bei der Fig. 1 um eine rein symbolhafte Darstellung des Fördertechnikelements Ka handelt. Beispielsweise sind die Anhalteeinrichtungen 4a, 4b als Ventile dargestellt. Selbstverständlich ist dies nicht einschränkend zu verstehen, sondern als Anhalteeinrichtung 4a, 4b können alle Elemente zum Anhalten eines Förderstroms eingesetzt werden. Beispielsweise können darunter Barrieren oder Schranken verstanden werden, die in den Förderstrom eingeschoben oder eingeschwenkt werden können. Unter einer Anhalteeinrichtung 4a, 4b können aber auch Förderbänder, Förderketten, Förderrollen und dergleichen verstanden werden, die angehalten werden können. Da diese Fördermittel in der Regel sowohl zum Fördern als auch zum Anhalten von Förderobjekten 17 dienen, ist in diesem Fall eine scharfe Abgrenzung zwischen den Anhalteeinrichtungen 4a, 4b und den eingehenden Fördersegmenten 1a, 1b nur schwer oder nicht möglich. Das eingehende Fördersegment 1a, 1b erfüllt daher in diesem Fall eine Doppelfunktion.

Vorstellbar ist es auch, dass - abweichend von der Darstellung in der Fig. 1 - nicht allen eingehenden Fördersegmenten 1a, 1b je eine Anhalteeinrichtung 4a, 4b zugeordnet ist. Beispielsweise kann die Anhalteeinrichtung 4b entfallen, sodass ein auf dem Fördersegment 1b eingehendes Förderobjekt 17 immer beziehungsweise priorisiert weitergeleitet wird.

Fig. 2 zeigt ein weiteres Beispiel für ein Fördertechnikelement Kb, das insbesondere verdeutlichen soll, dass die Steuerung 5 nicht auf die Ansteuerung der Anhalteeinrichtungen 4a, 4b beschränkt ist, sondern auch andere Aufgaben übernehmen kann. In der Fig. 2 ist die Steuerung 5 dazu mit Sensoren und/oder Leseeinrichtungen 7a, 7b verbunden, mit deren Hilfe die an den Fördersegmenten 1a, 1b eingehenden Förderobjekte 17 identifiziert und deren Ist-Rang beziehungsweise Ist-Position in einer Sortierreihenfolge bestimmt werden kann. Darüber hinaus ist mit der Ausgangsleitung 8 angedeutet, dass die genannte Erfassung eines eingehenden Förderobjekts 17 auch an andere Fördertechnikelemente Ka, Kb beziehungsweise auch an eine übergeordnete Steuerung gemeldet werden kann.

Generell kann unter einem "Fördertechnikelement" respektive "Knoten" jede Einrichtung zur Förderung und/oder Manipulation von Förderobjekten 17 verstanden werden, welche Förderströme zusammenführt und über ein abgehendes Fördersegment oder mehrere solche Segmente weiterführt. Für beispielsweise Einschleuser, Einmündungen von Nebenförderbahnen in eine Hauptförderbahn, Drehtische leuchtet dies basierend auf den Figuren 1 und 2 unmittelbar ein. Fördertechnikelemente, welche Förderströme zusammenführen, können aber beispielsweise auch durch Roboter zum Auslagern von Förderobjekten 17 aus einem Lager gebildet sein.

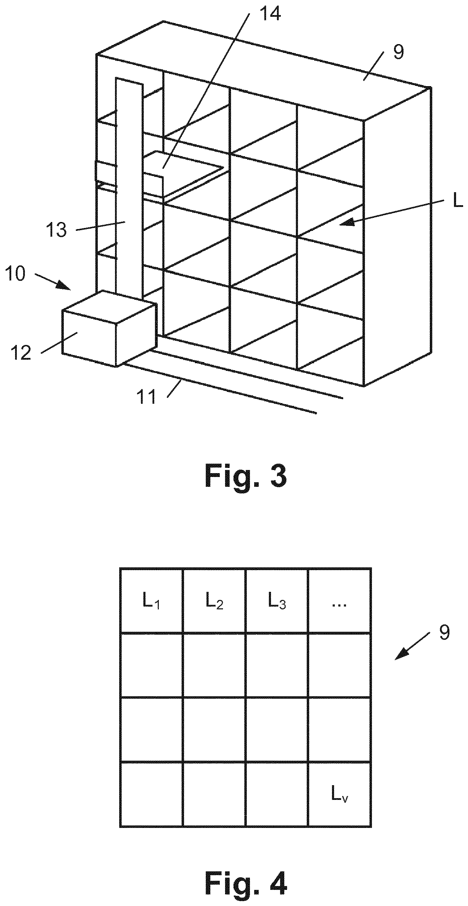

Fig. 3 zeigt dazu eine beispielhafte Anordnung mit einem Lager 9 mit mehreren Lagerplätzen L und einem Regalbediengerät 10, das einen auf Schienen 11 laufenden Wagen 12 mit einer auf einem Masten 13 vertikal verfahrbaren Hubplattform 14 aufweist. Die Funktion eines Regalbediengeräts 10, das hier als Auslagerungsroboter für das Lager 9 fungiert, ist an sich bekannt und braucht an dieser Stelle daher nicht im Detail erläutert werden.

Fig. 4 zeigt eine schematische Frontansicht des Lagers 9, aus welcher eine mögliche Nummerierung der Lagerplätze L1..Lv hervorgeht.

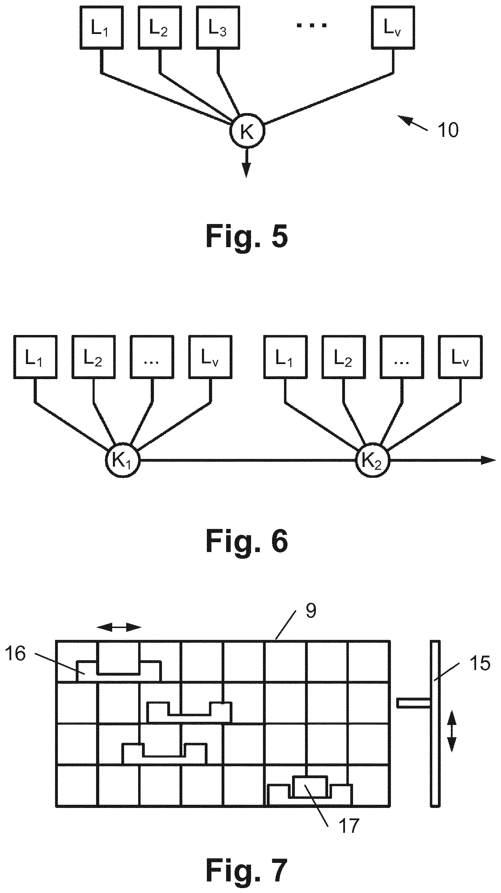

Fig. 5 zeigt nun eine logische beziehungsweise symbolhafte Repräsentation des in der Fig. 3 dargestellten Regalbediengeräts 10. Aus der Fig. 5 ist ersichtlich, dass eine der Anzahl v der Lagerplätzte L1..Lv entsprechende Anzahl an eingehenden Fördersegmenten 2 auf ein abgehendes Fördersegment 3 konzentriert wird. Die Konzentration des Förderstroms wird dabei durch die Hubplattform 14 gebildet, die in diesem Beispiel jeweils nur ein Förderobjekt 17 aufnehmen kann. Das Regalbediengerät 10 kann demzufolge als v-zu-1-Multiplexer betrachtet werden.

Denkbar ist auch, dass die Hubplattform 14 mehrere Förderobjekte 17 gleichzeitig aufnehmen kann. Eine logische Darstellung eines Regalbediengeräts 10 mit einer zwei Förderobjekte 17 aufnehmenden Hubplattform 14 ist in der Fig. 6 dargestellt. Jeder der Stellplätze bildet dabei einen logischen Knoten K1, K2. Im konkreten Beispiel wird angenommen, dass die Förderobjekte 17 nach rechts abtransportiert werden. Dies bedeutet, dass das am Knoten K1 befindliche Objekt erst abtransportiert werden kann, wenn das über den Knoten K2 transportierte Objekt die Hubplattform 14 verlassen hat. Aus diesem Grund wird der Ausgang des Knotens K1 als Eingang auf den Knoten K2 geführt. Selbstverständlich sind auch andere Anordnungen vorstellbar, bei denen die Förderobjekte 17 gleichzeitig die Hubplattform 14 verlassen können und die Knoten K1, K2 demgemäß nicht in der dargestellten Weise verknüpft sind. Allgemein kann ein Regalbediengerät als v-zu-w-Multiplexer betrachtet werden, wobei v die Anzahl der vom Regalbediengerät 10 erreichten Lagerplätze L1..Lv angibt und w die Anzahl der vom Regalbediengerät 10 gleichzeitig transportierten Objekte beziehungsweise die auf der Hubplattform 14 vorhandenen Stellplätze. Aus den Figuren 5 und 6 geht insbesondere auch hervor, dass die Fördersegmente generell auch als logische Fördersegmente gesehen werden können und nicht unbedingt rein physisch zu betrachten sind. Im Falle eines v-zu-1 Regalbediengeräts "existiert" zu einem Zeitpunkt ja stets nur ein eingehendes Fördersegment 1a, 1b.

Fig. 7 zeigt eine weitere beispielhafte Anordnung, umfassend ein Lager 9, einen neben dem Lager 9 angeordneten Lift 15 sowie mehrere auf den einzelnen Lagerebenen operierende, autonome Förderfahrzeuge 16 ("Shuttles"). Ein solches Shuttle 16, beziehungsweise ein solcher Auslagerungsroboter entnimmt ein Förderobjekt 17 von einem Lagerplatz L und transportiert es zum Lift 15. Dieser übernimmt das Förderobjekt 17 und transportiert es zu einer weiterführenden Förderbahn (nicht dargestellt).

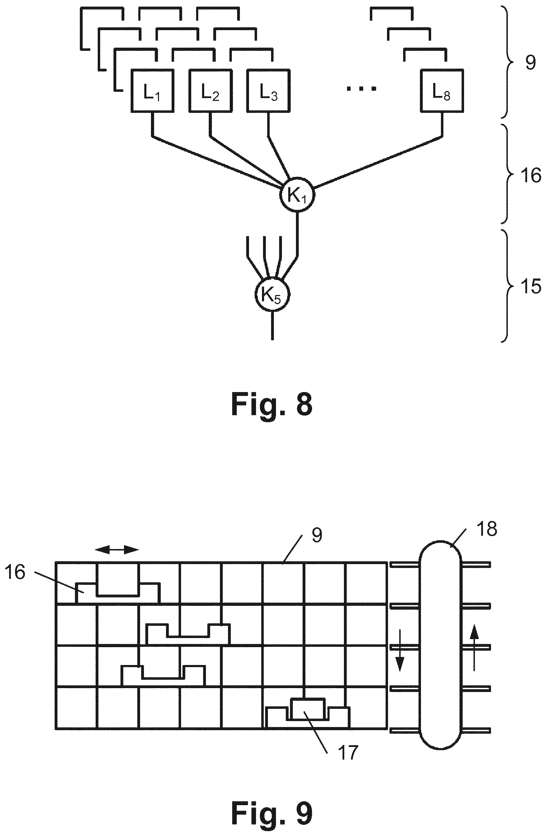

Die sich aus der Fig. 7 ergebende logische Struktur ist in der Fig. 8 dargestellt. Dabei bildet jedes Shuttle 16 einen Knoten K1..K4, auf welchen jeweils die Lagerplätze L1..L8 einer Lagerreihe geführt sind. Die von den Knoten K1..K4 abgehenden Fördersegmente 3 werden wiederum auf den Knoten K5 geführt, welcher den Lift 15 repräsentiert.

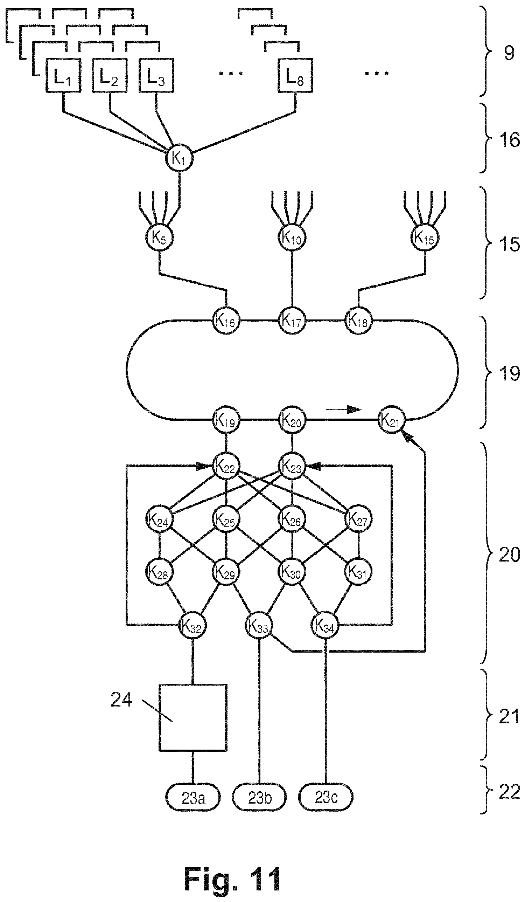

Fig. 9 zeigt eine weitere Anordnung mit einem Lager 9 und Shuttles 16, welche der in Fig. 11 gezeigten Anordnung sehr ähnlich ist. Im Unterschied dazu ist aber anstelle des Lifts 15 ein Paternoster 18 vorgesehen.

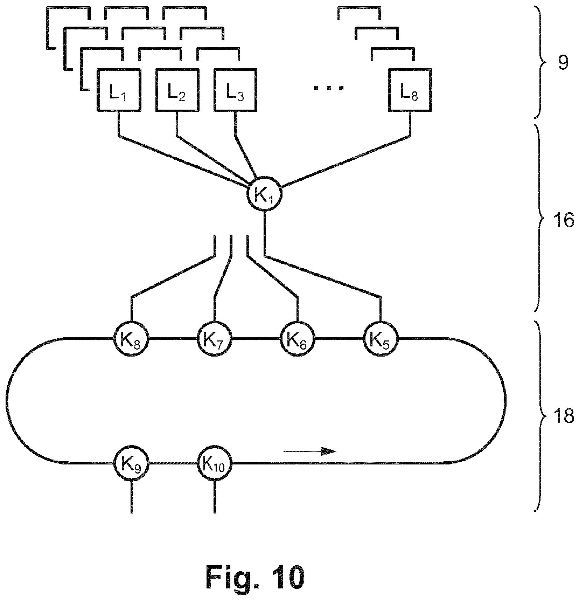

Fig. 10 zeigt wiederum eine logische Repräsentation der in Fig. 9 dargestellten Anordnung. Unter der Voraussetzung, dass der Paternoster 18 die Förderobjekte 17 im Kreis transportieren kann, wird dieser in der Fig. 10 als Schleife dargestellt, wobei die Knoten K5..K8 die Übergabepunkte in den einzelnen Ebenen des Lagers 9 und die Knoten K9 und K10 zwei Abzugsbahnen bilden, die (physisch) beispielsweise nebeneinander oder auch übereinander angeordnet sein können.

Fig. 11 zeigt nun ergänzend ein etwas komplexeres Beispiel für eine Förderanlage. Wie auch schon in den Figuren 5, 6, 8 und 10 sind mehrere Fördertechnikelemente Ka, Kb derart miteinander gekoppelt, dass zumindest eine Ankopplung 2 für ein abgehendes Fördersegment 3 des einen Fördertechnikelements Ka, Kb mit einem eingehenden Fördersegment 1a, 1b eines anderen Fördertechnikelements Ka, Kb direkt oder indirekt verbunden ist. Wie auch schon in den Figuren 5, 6, 8 und 10 sind die Fördertechnikelemente respektive Knoten K1..K34 lediglich vereinfacht dargestellt.

"Direkt" bedeutet in obigem Zusammenhang, dass die Ankopplung 2 für ein abgehendes Fördersegment 3 des einen Fördertechnikelements Ka, Kb ohne Zwischenschaltung anderer Elemente mit einem eingehenden Fördersegment 1a, 1b eines anderen Fördertechnikelements Ka, Kb verbunden ist. Beispielsweise betrifft dies in der Fig. 11 die Knoten K5 und K16. "Indirekt" bedeutet, dass andere Elemente zwischengeschaltet sind, insbesondere Abzweiger und dergleichen. Beispielsweise ist die Verbindung der Knoten K16 und K24 indirekt, da K19 und K22 zwischengeschaltet sind und als Auffächerung fungieren.

Konkret umfasst die in der Fig. 11 dargestellte Anordnung ein Lager 9, mehrere darin autonom operierende Shuttles 16 sowie an die Lager 9 angeschlossene Lifte 15. In diesem Beispiel weist das Lager 9 drei Regalreihen beziehungsweise Regalgassen auf, wobei jede Regalreihe 32 Lagerplätzte L aufweist, die in vier Ebenen zu je acht Plätzen angeordnet sind. Demgemäß bewegen sich in der ersten Regalreihe die durch die Knoten K1..K4 repräsentierten Shuttles 16, in der zweiten Regalreihe die durch die Knoten K6..K9 repräsentierten Shuttles 16 und in der dritten Regalreihe die durch die Knoten K11..K14 repräsentierten Shuttles 16. Die Lifte 15 sind durch die Knoten K5, K10 und K15 repräsentiert.

An die Lifte 15 schließt sich eine horizontale Schleife 19 an, in der die Knoten K16..K21 angeordnet sind. Der Pfeil bezeichnet dabei die Förderrichtung. Über die Knoten K19 und K20 werden Förderobjekte 17 aus der Schleife 19 in ein Netz 20 übergeben, das mehrere miteinander vernetzte Knoten K22..K34 aufweist. An das Netz 20 schließt sich ein optionaler Sortierbereich 21 und an diesen ein Kommissionierbereich 22 an. Im Kommissionierbereich 22 befinden sich drei zu versorgende Ziele 23a..23c, beispielsweise Arbeitsplätze, an denen Förderobjekte 17 automatisch oder manuell in Versandbehälter oder auf Paletten geladen werden. In dem in Fig. 11 dargestellten Beispiel ist nur einem Ziel 23a eine Sortierstufe 24 vorgeschaltet. Denkbar wäre aber auch, dass allen Zielen 23a..23c je eine Sortierstufe 24 vorgeschaltet ist oder auch keinem.

In dem in Fig. 11 gezeigten Beispiel sind mehrere Fördertechnikelemente/Knoten K1..K34 direkt oder indirekt ringförmig miteinander verbunden. Dementsprechend wird wenigstens ein Teilförderstrom ringförmig über die genannten Fördertechnikelemente/Knoten K1..K34 geführt. Mit anderen Worten wird eine Rückkopplung vorgesehen. Beispielsweise ist der Knoten K21 mit dem Knoten K18, der Knoten K32 mit dem Knoten K22, der Knoten K34 mit dem Knoten K23 sowie der Knoten K33 mit dem Knoten K21 ringförmig verbunden. Auf diese Weise kann der Ordnungsgrad der transportierten Förderobjekte 17 in mehreren Durchläufen erhöht werden, beziehungsweise können Lücken in der Reihenfolge schrittweise aufgefüllt werden. Die Begriffe "stromabwärts" und "stromaufwärts" können in Bezug auf einen solchen ringförmigen Teilstrom synonymisch gebraucht werden. Selbstverständlich sind die in der Fig. 11 dargestellten Rückkopplungen rein beispielhaft und dienen der besseren Illustration der Möglichkeiten. Andere ringförmige Verbindungen sind natürlich gleichermaßen vorstellbar.

In der Fig. 11 sind weiterhin einige Auffächerungen des Förderstroms dargestellt, beispielsweise bei den Knoten K22..K31. Generell kann eine Auffächerung dazu dienen, einen abgehenden Förderstrom in verschiedene Bereiche einer Förderanlage beziehungsweise zu verschiedenen Zielen 23a..23c zu leiten. Dabei kann ein Knoten K22..K31 mit mehreren abgehenden Fördersegmenten 3 gedanklich auch in einen Knoten K22..K31 mit nur einem abgehenden Fördersegment 3 und nachgelagerten Knoten mit mehreren abgehenden Fördersegmenten 3 aufgeteilt werden.

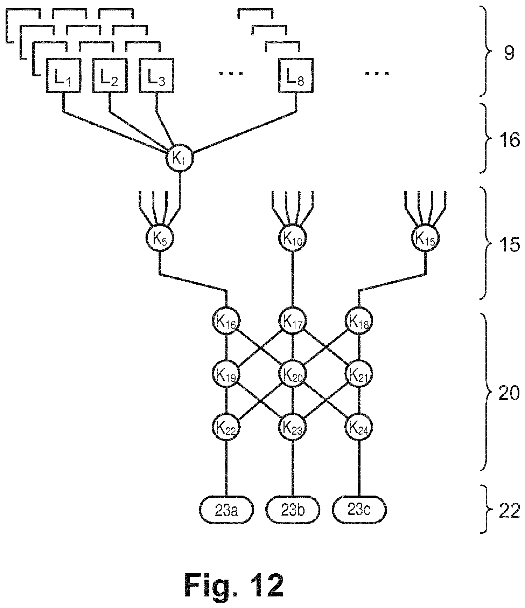

Fig. 12 zeigt eine Struktur einer beispielhaften Förderanlage, welche der in Fig. 11 gezeigten Struktur sehr ähnlich ist. Im Unterschied dazu fehlen aber eine ringförmige Förderbahn, Rückkopplungen und Sortierstufen/Sequenzer 24. Mit Hilfe des Netzes 20 können aber Fehler in einer Ist-Reihenfolge dennoch korrigiert werden. Beispielsweise können Objekte, welche den Knoten K16 verlassen, an den Knoten K19 oder an den Knoten K20 geleitet werden. Am Knoten K22 können die von den Knoten K19 und K20 stammenden Förderobjekte 17 wieder zusammengeführt werden. Das Netz kann zusätzlich oder alternativ aber auch dazu benutzt werden, die von den Knoten K16, K17 und K18 stammenden Förderobjekte 17 an die Ziele 23a, 23b und 23c zu leiten.

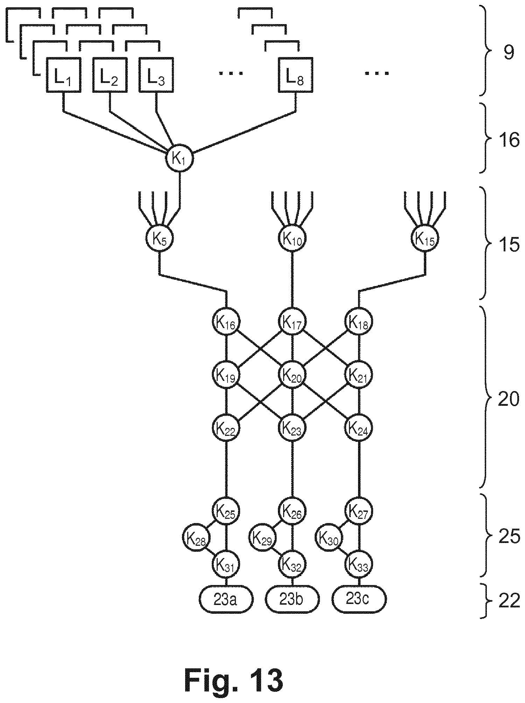

Fig. 13 zeigt eine weitere beispielhafte Struktur einer Förderanlage, welcher der in der Fig. 12 gezeigten Struktur sehr ähnlich ist. Im Unterschied dazu sind aber gesonderte Ausweichstrecken 25 vorgesehen, um Fehler in einer Sortierreihenfolge eines eintreffenden Förderstroms zu korrigieren.

Das vorgestellte Verfahren wird nun basierend auf der in Fig. 12 gezeigten Förderanlage näher erläutert:

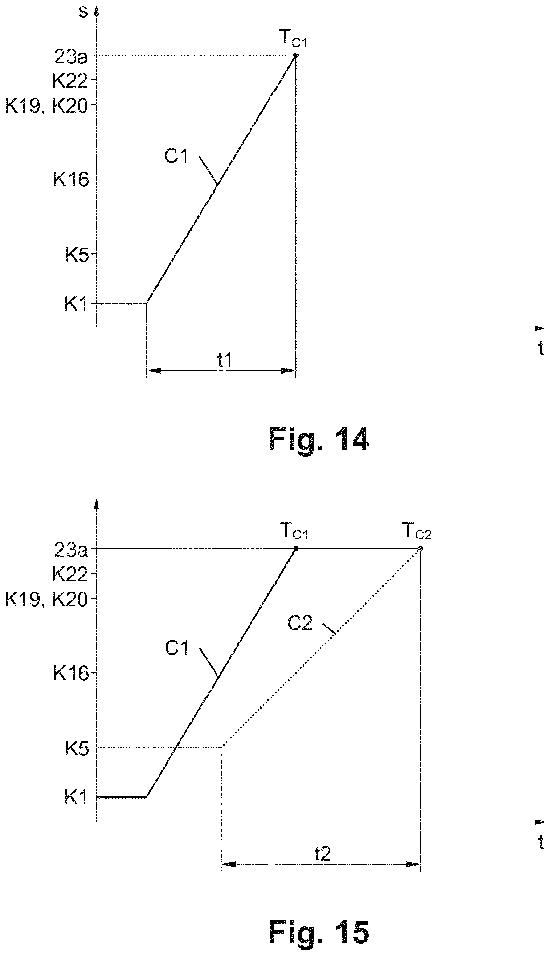

Die Fig. 14 zeigt dazu ein Diagramm, in dem der Weg s über der Zeit t dargestellt ist. Konkret verläuft der dargestellte Weg über die Knoten K1, K5, K16, K19 beziehungsweise K20 und K22 zum Ziel 23a. In der Fig. 14 ist dargestellt, wie sich das Förderobjekt 17 mit der Ordnungsnummer C1 ausgehend vom Knoten K1 bis zum Ziel 23a bewegt und dort nach der Zeitspanne t1 zum Zeitpunkt TC1 eintrifft.

Fig. 15 zeigt zusätzlich den Verlauf für das Förderobjekt 17 mit der Ordnungsnummer C2. Dieses wird am Knoten K5 freigegeben und erreicht das Ziel 23a nach der Zeitspanne t2 zum Zeitpunkt TC2. Wie aus der Fig. 15 erkennbar ist, bewegt sich das Förderobjekt 17 mit der Ordnungsnummer C2 etwas langsamer als jenes mit der Ordnungsnummer C1.

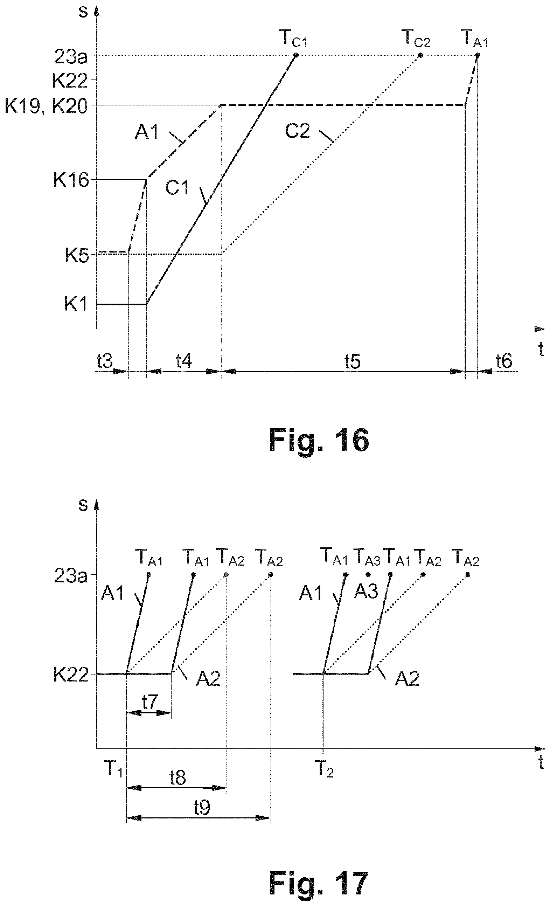

Fig. 16 zeigt schließlich zusätzlich den Verlauf für das Förderobjekt 17 mit der Ordnungsnummer A1. Dieses bewegt sich ausgehend vom Knoten K5 relativ flott zum Knoten K16 und dann etwas langsamer zum Knoten K20, an dem es eine Zeit lang angehalten wird. Schließlich bewegt es sich ebenfalls zum Ziel 23a und erreicht dieses zum Zeitpunkt TA1. Die vom Knoten K5 bis zum Knoten K16 benötigte Zeit ist mit t3 bezeichnet, die vom Knoten K16 bis zum Knoten K20 benötigte Zeit mit t4, die Wartezeit am Knoten K20 mit t5 und die vom Knoten K5 bis zum Ziel 23a benötigte Zeit mit t6.

Der Verlauf der Förderobjekte 17 durch die Förderanlage wird im Voraus geplant. Gemäß dem vorgeschlagenen Verfahren zum Bündeln von Förderströmen werden für die Förderobjekte 17 Soll-Ankunfts-Zeitpunkte TA1, TC1 und TC2 berechnet, an dem die Förderobjekte 17 planmäßig am Zielort 23a eintreffen sollen. Weiterhin wird für ein an einem Fördertechnikelement/Knoten K1, K5, K16, K19, K20 und K22 wartendes Förderobjekt 17 eine Soll-Durchlaufzeit t1, t2, t6 berechnet, welche das Förderobjekt 17 planmäßig für den Transport von einer momentanen Position bis zum Zielort 23a benötigt. Die Soll-Durchlaufzeit des Förderobjekts 17 mit der Ordnungsnummer C1 vom Knoten K1 bis zum Ziel 23a beträgt t1, die Soll-Durchlaufzeit des Förderobjekts 17 mit der Ordnungsnummer C2 vom Knoten K5 bis zum Ziel 23a beträgt t2, die Soll-Durchlaufzeit des Förderobjekts 17 mit der Ordnungsnummer A1 vom Knoten K5 bis zum Knoten K16 beträgt t3 und so weiter. Ein Förderobjekt 17 wird nun zu einem Freigabe-Zeitpunkt freigegeben, welcher im Wesentlichem dem Soll-Ankunfts-Zeitpunkt TA1, TC1, TC2 weniger der Soll-Durchlaufzeit t1, t2, t3, etc. entspricht.

Gemäß der Planung, wird die Soll-Durchlaufzeit des Förderobjekts 17 mit der Ordnungsnummer A1 vom Knoten K5 bis zum Ziel 23a mit t3+t4+t5+t6 berechnet. Das genannte Förderobjekt 17 wird am Knoten K5 daher zum Zeitpunkt
TA1-(t3+t4+t5+t6) freigegeben, am Knoten K16 zum Zeitpunkt TA1-(t4+t5+t6), und am Knoten K20 zum Zeitpunkt TA1-t6. Für die anderen Förderobjekte 17 wird die Berechnung sinngemäß ausgeführt.

Mit Hilfe des vorgeschlagenen Verfahrens treffen die Förderobjekte 17 somit zu einem vorgebbaren Zeitpunkt TA1, TC1, TC2 am Zielort 23a ein, vorausgesetzt dass der Plan fehlerfrei oder mit vernachlässigbaren Fehlern ausgeführt wird.

Insbesondere können die Soll-Ankunfts-Zeitpunkte TA1, TC1, TC2 entsprechend einer Sortierreihenfolge berechnet werden. Im vorliegenden Beispiel wird angenommen, dass die Förderobjekte 17 in der Reihenfolge C1, C2 und A1 am Zielort 23a eintreffen sollen. An dieser Stelle wird angemerkt, dass die vorgegebenen Soll-Ankunfts-Zeitpunkte TA1, TC1, TC2 nur eine von mehreren Lösungen für die geforderte Reihenfolge C1, C2 und A1 darstellen und die Reihenfolge C1, C2 und A1 auch durch andere Soll-Ankunfts-Zeitpunkte TA1, TC1, TC2 erfüllt werden kann.

Fig. 17 zeigt nun, dass es vorteilhaft ist, ein an einem Fördertechnikelement/Knoten K22 wartendes erstes Förderobjekt 17 mit der Ordnungsnummer A1 nach einem zweiten Förderobjekt 17 mit der Ordnungsnummer A2 freizugeben, welches einen weiter in der Zukunft liegenden Soll-Ankunfts-Zeitpunkt TA2 aufweist, sofern die Soll-Durchlaufzeit für das zweite Förderobjekt A2 länger ist als für das erste Förderobjekt A1.

Die Förderobjekte 17 können einen Knoten Ka, Kb, K1..K34 in der Regel nur hintereinander mit einer dazwischen liegenden Verzögerungszeit passieren. In dem in der Fig. 17 dargestellten Beispiel ist diese Verzögerungszeit mit t7 angegeben.

Wird das Förderobjekt 17 mit der Ordnungsnummer A2 nun zum Zeitpunkt T1 und das Förderobjekt 17 mit der Ordnungsnummer A1 nach der Verzögerungszeit t7 freigegeben (also so wie oben angegeben), dann ergibt sich eine Belegungszeit t8 des Förderabschnitts zwischen dem Knoten K22 und dem Ziel 23a. Wird dagegen das Förderobjekt 17 mit der Ordnungsnummer A1 zum Zeitpunkt T1 und das Förderobjekt 17 mit der Ordnungsnummer A2 nach der Verzögerungszeit t7 freigegeben, dann ergibt sich eine Belegungszeit t9 des Förderabschnitts zwischen dem Knoten K22 und dem Ziel 23a, welche deutlich länger ist als die Belegungszeit t8. Durch die vorgeschlagenen Maßnahmen kann also die Belegungszeit eines Förderabschnitts gering gehalten werden. Dabei ist festzuhalten, dass die Sortierreihenfolge A1→A2 von beiden Varianten erfüllt wird. Erstere benötigt jedoch wie gesagt weniger Zeit. Unter der "Belegungszeit des Förderabschnitts" ist also insbesondere jene Zeitspanne zu verstehen, welche ein Förderobjekt 17 zum Durchlaufen dieses Förderabschnitts benötigt.

In der Realität können geforderte Soll-Freigabe-Zeitpunkte nicht immer eingehalten werden. Zum Beispiel kann es auf der Förderanlage zu unvorhergesehenen Störungen kommen, welche die Förderung der Förderobjekte 17 zumindest in einem Teilabschnitt der Förderanlage verzögern. Der rechte Teil der Fig. 17 zeigt dazu ein Beispiel, in dem an sich die Sortierreihenfolge A1→A2→A3 erwünscht wäre, die Freigabe am Knoten 22 aber erst zum Zeitpunkt T2 starten kann.

Die obige Vorgangsweise, das heißt die Freigabe des Förderobjekts A2 vor dem Förderobjekt A1, führt zwar wie besprochen zu einer geringen Belegungszeit, verursacht aber einen Sortierfehler, da die Förderobjekte 17 in der Reihenfolge A3→A1→A2 einlangen.

In einer weiteren vorteilhaften Ausführungsvariante des vorgestellten Verfahrens wird ein an einem Fördertechnikelement/Knoten K22 wartendes erstes Förderobjekt 17 mit der Ordnungsnummer A1 vor einem zweiten Förderobjekt 17 mit der Ordnungsnummer A2 und einem weiter in der Zukunft liegenden Soll-Ankunfts-Zeitpunkt TA2 freigegeben, wenn die Soll-Durchlaufzeit für das zweite Förderobjekt A2 länger ist als für das erste Förderobjekt A1 und das erste Förderobjekt A1 dadurch vor einem dritten Förderobjekt A3, dessen Soll-Ankunfts-Zeitpunkt TA3 nach dem Soll-Ankunfts-Zeitpunkt TA2 des zweiten Förderobjekt A2 liegt, am Ziel 23a ankommt. Durch diese Vorgangsweise werden Sortierfehler verringert, so wie diese im rechten Teil der Fig. 17 dargestellt ist. Wird das Förderobjekt A1 wie vorgeschlagen vor dem Förderobjekt A2 freigegeben, langen die Förderobjekte 17 in der Reihenfolge A1→A3→A2 am Ziel 23a ein. Im Vergleich zur weiter oben angesprochenen Sortierreihenfolge A3→A1→A2 weist die Sortierreihenfolge A1→A3→A2 einen Sortierfehler weniger auf.

Das mit der Steuerung 5 verwirklichte Verfahren wird im Folgenden nun auch anhand einer etwas anderen Darstellung näher erläutert:
In einem ersten Schritt werden wiederum Soll-Ankunfts-Zeitpunkte für die Förderobjekte 17 berechnet. In dem Beispiel wird angenommen, dass drei Ziele 23a..23c mit Förderobjekten 17 versorgt werden und demgemäß drei Soll-Sortierreihenfolgen A1..A3, B1 und C1..C3 gebildet werden. Das heißt an einem ersten Ziel 23a sollen die Förderobjekte 17 in der Reihenfolge A1, A2, A3 ankommen, an einem zweiten Ziel 23b nur das Förderobjekt B2 und an einem dritten Ziel 23c in der Reihenfolge C1, C2, C3. Die entsprechenden Soll-Ankunfts-Zeitpunkte sind mit TA1..TA3, TB1 und TC1..TC3 bezeichnet. Generell können diese Soll-Ankunfts-Zeitpunkte TA1..TA3, TB1 und TC1..TC3 in einem Speicher respektive einer Tabelle der Steuerung 5 und/oder einer übergeordneten Steuerung gespeichert sein. In der Tabelle können zusätzlich auch die Soll-Durchlaufzeiten gespeichert sein. In der Tabelle können zudem Soll-Freigabe-Zeitpunkte gespeichert sein.

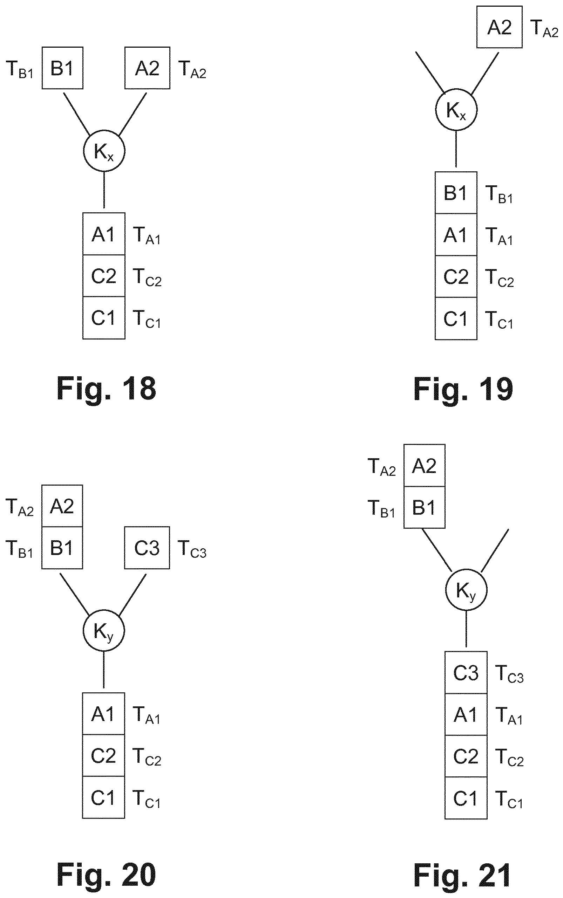

Die Figur 18 zeigt den Zustand an einem Knoten Kx nun zu einem ersten Zeitpunkt, nämlich die physische Anordnung einiger Förderobjekte 17 sowie deren zugeordnete Soll-Ankunfts-Zeitpunkte TA1..TA3, TB1 und TC1..TC3. Konkret wird in diesem Beispiel angenommen, dass die Objekte C1, C2 und A1 den Knoten Kx bereits passiert haben und die Objekte B1 und A2 am Knoten Kx angehalten wurden.

In dem betreffenden Beispiel wird angenommen, dass der Soll-Ankunfts-Zeitpunkt TB1 des Förderobjekts 17 mit der Ordnungsnummer B1 vor dem Soll-Ankunfts-Zeitpunkt TA2 des Förderobjekts 17 mit der Ordnungsnummer A2 liegt. Dementsprechend wird das Förderobjekt B1 vor dem Förderobjekt A2 freigegeben. In der Fig. 19 ist dazu ein Zustand gezeigt, in dem das Förderobjekt B1 den Knoten Kx bereits passiert hat, das Förderobjekt A2 dagegen dort noch wartet.

Die Figur 20 zeigt einen Zustand an einem dem Knoten Kx nachgelagerten Knoten Ky zu einem späteren Zeitpunkt. Die vom Knoten Kx stammenden Objekte langen dabei am linken Zweig des Knotens Ky ein. Es wird nun angenommen, dass die Objekte C1, C2, A1 den Knoten Ky bereits passiert haben und die Objekte B1, A2 weiterhin am Knoten Ky warten. Zudem wartet am rechten Zweig das Objekt C3.

In dem betreffenden Beispiel wird angenommen, dass der Soll-Ankunfts-Zeitpunkt TC3 des Förderobjekts 17 mit der Ordnungsnummer C3 vor dem Soll-Ankunfts-Zeitpunkt TB1 des Förderobjekts 17 mit der Ordnungsnummer B1 liegt. Dementsprechend wird das Förderobjekt C3 vor dem Förderobjekt B1 freigegeben. In der Fig. 21 ist dazu ein Zustand gezeigt, in dem das Förderobjekt C3 den Knoten Ky bereits passiert hat, das Förderobjekt B1 dagegen dort noch wartet.

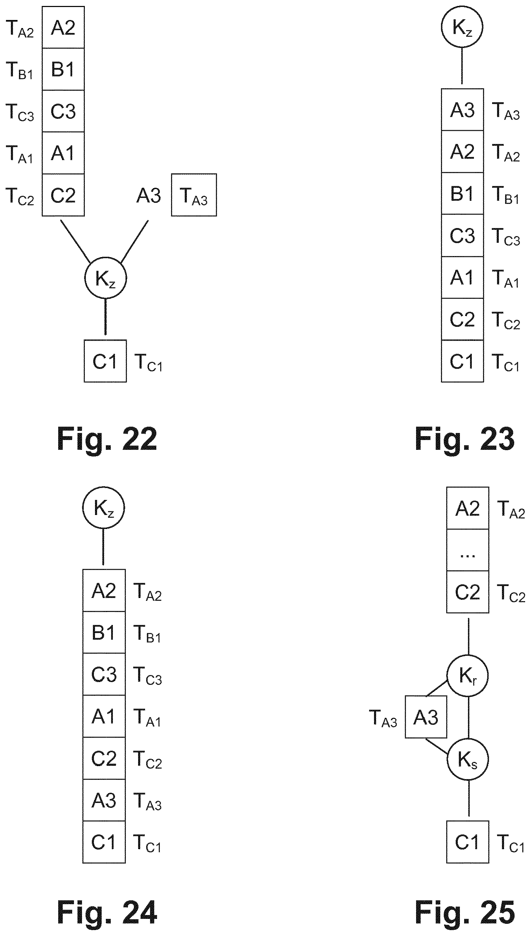

Die Figur 22 zeigt weiterhin einen Zustand an einem dem Knoten Ky nachgelagerten Knoten Kz zu einem späteren Zeitpunkt. Die vom Knoten Ky stammenden Objekte langen dabei am linken Zweig des Knotens Kz ein. Es wird nun angenommen, dass das Objekt C1 den Knoten Kz bereits passiert hat und die Objekte C2, A1, C3, B1, A2 weiterhin am Knoten Kz warten. Zudem wartet am rechten Zweig des Knotens Kz das Objekt A3.

In dem betreffenden Beispiel wird angenommen, dass der Soll-Ankunfts-Zeitpunkt TC2 des Förderobjekts 17 mit der Ordnungsnummer C2 vor dem Soll-Ankunfts-Zeitpunkt TA3 des Förderobjekts 17 mit der Ordnungsnummer A3 liegt. Dementsprechend wird das Förderobjekt C2 vor dem Förderobjekt A3 freigegeben. In der Fig. 23 ist nun ein Zustand gezeigt, in dem alle Förderobjekte A1..A3, B1, C1..C3 den Knoten Kz passiert haben und in der geforderten Reihenfolge vorliegen.

Ist im Verlauf der Förderstrecke ein Puffer, ein Sequenzer 24, eine Ausweichstrecke 20, 25 oder eine Rückkopplung 19 vorhanden, so können gezielt temporäre Sortierfehler in der Planung des Förderablaufs berücksichtigt werden. Vorteilhaft ist es beispielsweise, wenn ein Förderobjekt 17 in einen Puffer, einen Sequenzer 24, eine Ausweichstrecke 20, 25 oder eine Rückkopplung 19 gefördert wird und dort angehalten wird, bis diese Position von einem dem betreffenden Förderobjekt 17 in der Sortierreihenfolge vorangehenden Förderobjekt 17 passiert wurde, wenn dies zu einer Verringerung der Belegungszeit der Förderanlage führt.

In der Fig. 24 ist dazu ein Zustand nach dem Knoten Kz gezeigt, in dem das Förderobjekt 17 mit der Ordnungsnummer A3 einen Sortierfehler verursacht. Zwecks Illustration des vorgestellten Verfahrens wird in den Figuren 25 bis 28 die Behebung des temporären Sortierfehlers dargestellt. Dazu wird das den Sortierfehler verursachende Förderobjekt A3 aus dem Förderstrom ausgeschleust und zu einem späteren Zeitpunkt wieder eingeschleust.

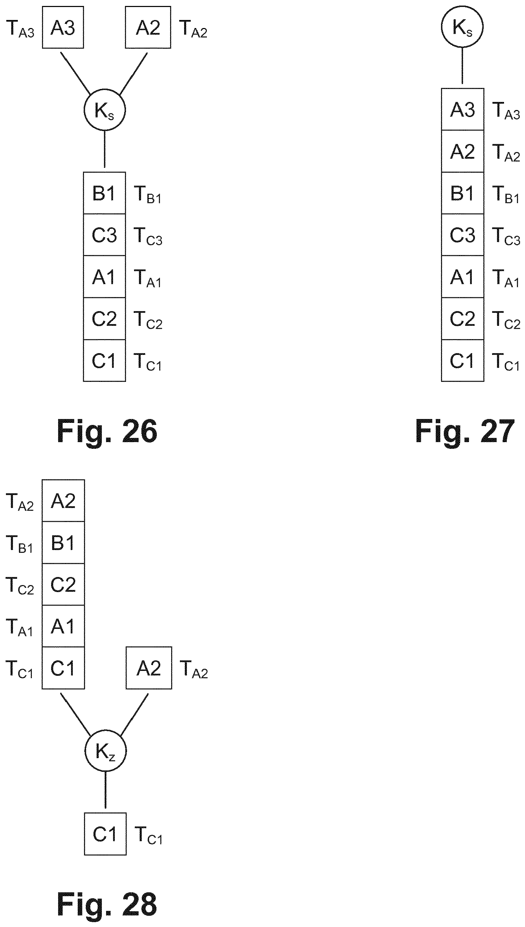

In der Fig. 25 wird das Objekt A3 an einem Knoten Kr daher in einen linken Zweig geleitet und an einem Knoten Ks angehalten, während die Objekte C2, A1, C3, B1 direkt durch die Knoten Kr und Ks durchgeschleust werden. Zu einem nachfolgenden Zeitpunkt warten somit die Objekte A2 und A3 am Knoten Ks. Dieser Zustand ist in Fig. 26 dargestellt. Fig. 27 zeigt in Folge die korrigierte Sortierung, welche auch der bereits in Fig. 23 gezeigten Sortierung entspricht, allerdings nach dem Knoten Ks. Im obigen Beispiel wurde das Förderobjekt A3 in eine Ausweichstrecke gefördert. Ganz ähnlich gestaltet sich der Vorgang, wenn das Förderobjekt A3 alternativ in einen Puffer, einen Sequenzer 24 oder eine Rückkopplung 19 hinein transportiert wird.

Die Fig. 28 zeigt nun eine Situation, in der mehrere Förderobjekte 17 die gleiche Ordnungsnummer in der Sortierreihenfolge aufweisen. Konkret sind zwei Objekte A2 und zwei Objekte C1 vorhanden. Diese Vorgehensweise ist etwa dann sinnvoll, wenn mehrere gleichartige Objekte an einer bestimmten Position am Ziel ankommen sollen. Beispielsweise kann es sich bei den Objekten A2 um mehrere gleichartige Wasserflaschen handeln, bei denen es egal ist, welche Wasserflasche an welcher mehrerer für Wasserflaschen möglichen Positionen angeordnet wird.

Die Fig. 28 zeigt eine Situation am Knoten Kz, welche der in der Fig. 22 dargestellten Situation vergleichbar ist. Die vom Knoten Ky stammenden Objekte langen wiederum am linken Zweig des Knotens Kz ein. Es wird nun angenommen, dass das Objekt C1 den Knoten Kz bereits passiert hat und ein weiteres Objekt C1 sowie die Objekte A1, C2, B1, A2 weiterhin am Knoten Kz warten. Zudem wartet am rechten Zweig des Knotens Kz ein weiteres Objekt A2.

Grundsätzlich können die Soll-Ankunfts-Zeitpunkte TA2 für beide Förderobjekte A2 gleich sein oder verschieden. Dementsprechend können auch die Soll-Ankunfts-Zeitpunkte TC1 für beide Förderobjekte C1 gleich sein oder verschieden. In dem vorliegenden Beispiel wird nun angenommen, dass die Soll-Ankunfts-Zeitpunkte TC1 vor den Soll-Ankunfts-Zeitpunkten TA2 liegen. Dementsprechend wird am Knoten Kz das Förderobjekt 17 mit der Ordnungsnummer C1 freigegeben. Die Korrektur eines Sortierfehlers in einem/einer dem Knoten Kz stromabwärts nachgelagerten Puffer, Sequenzer 24, Ausweichstrecke 20, 25 oder Rückkopplung 19 ist auch bei dieser Verfahrensvariante möglich.

Selbstverständlich können mit dem vorgeschlagenen Verfahren nicht nur geplante Sortierfehler, sondern auch ungeplante Sortierfehler behoben werden. Diese können beispielsweise durch Störungen auf der Förderanlage auftreten. Entsprechend dem vorgeschlagenen Verfahren wird ein zweites Förderobjekt 17, welches einem ersten Förderobjekt 17 in einer Sortierreihenfolge folgt, in einen Puffer, einen Sequenzer 24, eine Ausweichstrecke 20, 25 oder eine Rückkopplung 19 gefördert und dort angehalten, bis diese Position vom ersten Förderobjekt 17 passiert wurde, wenn das erste Förderobjekt 17 auf der Förderanlage außerplanmäßig verzögert wurde und kein Soll-Ankunfts-Zeitpunkt mehr vor dem Soll-Ankunfts-Zeitpunkt des zweiten Förderobjekts 17 ohne Nutzung des Puffers, des Sequenzers 24, der Ausweichstrecke 20, 25 oder der Rückkopplung 19 möglich ist.

Besonders vorteilhaft ist es in diesem Zusammenhang, wenn die Soll-Ankunfts-Zeitpunkte TA1..TA3, TB1, TC1..TC3 für jene Förderobjekte 17, welche noch nicht an ihrem Ziel 23a..23b eingetroffen sind, unter Berücksichtigung der genannten außerplanmäßigen Verzögerung neu berechnet werden. Dadurch wird die Planung beziehungsweise die weitere Ausführung des Verfahrens auf vorhersehbare Umstände gestützt.

Besonders vorteilhaft ist es dabei wiederum, wenn mehrere Varianten von jeweils eine vorgegebene Sortierreihenfolge einhaltenden Soll-Ankunfts-Zeitpunkten TA1..TA3, TB1, TC1..TC3 für mehrere Förderobjekte 17, welche noch nicht an ihrem Ziel 23a..23b eingetroffen sind, unter Berücksichtigung der genannten außerplanmäßigen Verzögerung berechnet werden und jene Variante tatsächlich ausgeführt wird, welche die geringste Belegungszeit der Förderanlage verursacht.

Günstig ist es, wenn zumindest jene Verfahrensschritte, welche einer Entscheidung über eine Freigabe eines Förderobjekts 17 zugeordnet sind, bis auf die Berücksichtigung eines Soll-Ankunfts-Zeitpunkts TA1..TA3, TB1, TC1..TC3 / einer Soll-Durchlaufzeit / eines Soll-Freigabe-Zeitpunkts unabhängig von allen anderen Fördertechnikelementen/Knoten Ka..Kz, K1..K34 und/oder unabhängig von einer zentralen Steuerung ausgeführt werden. Dadurch kann die Kommunikation und damit der Aufwand für Kommunikationsleitungen zwischen den Fördertechnikelementen K1..K34 gering gehalten werden.

In diesem Zusammenhang ist es auch von Vorteil, wenn eine Programmlogik im Hinblick auf die Freigabe eines Förderobjekts 17 in allen Fördertechnikelementen K1..K34 identisch aufgebaut ist, beziehungsweise wenn die Verfahrensschritte im Hinblick auf die Freigabe eines Förderobjekts 17 in allen Fördertechnikelementen K1..K34 in identischer Weise ausgeführt werden. Auf diese Weise kann der Aufwand für die Herstellung beziehungsweise Programmierung der Steuerung für eine Förderanlage insgesamt gering gehalten werden, da diese aus mehreren identischen Modulen aufgebaut ist. Auch der Aufwand für eine eventuelle Fehlersuche kann dadurch klein gehalten werden.

Zur Bildung einer vorgegebenen Sortierreihenfolge ist es auch von Vorteil, wenn Förderobjekte 17 im Hinblick auf die Ziele 23a..23c und in Bezug auf eine Sortierreihenfolge für ein zu versorgendes Ziel 23a..23c geordnet ausgelagert werden. Das bedeutet, dass zuerst Förderobjekte 17 für das Ziel 23a..23c mit der niedrigsten Position in einer Reihenfolge ausgelagert werden, dann die Förderobjekte 17 mit der zweitniedrigsten Position usw. Zudem werden die Förderobjekte 17 für ein bestimmtes Ziel 23a..23c ebenfalls geordnet ausgelagert. Befinden sich in der Regalreihe des Lagers 9, aus dem mit den Fördertechnikelementen K1..K4 ausgelagert wird, zum Beispiel die Förderobjekte 17 Nummer 3 und Nummer 5 des Ziels 23a und die Förderobjekte 17 Nummer 1 und 7 des Ziels 23b, so werden die Förderobjekte 17 in der Reihenfolge A3, A5, B1, B7 ausgelagert. Bei diesem Beispiel wird angenommen, dass sich die in der Reihenfolge fehlenden Förderobjekte 17 (also z.B. A1, A2, A4, B2, B3, usw.) in anderen Regalreihen befinden, die von anderen Fördertechnikelementen K6..K9, K11..K14 ausgelagert werden. Auf diese Weise kann insgesamt ein hoher Ordnungsgrad der auf der Fördertechnik vorhandenen Förderströme erzielt werden.

Alternativ wäre auch vorstellbar, dass die Förderobjekte 17 in Bezug auf eine Sortierreihenfolge für ein zu versorgendes Ziel 23a..23c geordnet, im Hinblick auf die Ziele 23a..23c jedoch chaotisch beziehungsweise ungeordnet aus dem Lager 9 ausgelagert werden. Bezogen auf das zuvor genannte Beispiel bedeutet dies, dass die Förderobjekte 17 beispielsweise auch in der Reihenfolge B1, A3, A5, B7 oder beispielsweise auch in der Reihenfolge B1, A3, B7, A5 ausgelagert werden können. Durch die ungeordnete Auslagerung auf Zielebene kann der Durchsatz bei der Auslagerung erhöht werden, beispielsweise wenn bei der Auslagerung Transportwege der Fördertechnikelemente K1..K15 minimiert werden.

Um Blockaden auf der Förderanlage zu erkennen beziehungsweise um diese zu beheben, kann in einer vorteilhaften Ausführungsform auch vorgesehen sein, dass die Freigaben der Knoten K1..K34 pro Zeiteinheit von einer übergeordneten Steuerung überwacht werden und jene Anhalteeinrichtung 4a, 4b freigegeben wird, an welcher das Förderobjekt 17 mit der niedrigsten Ordnungsnummer wartet, wenn für die Freigaben pro Zeiteinheit ein Schwellwert unterschritten wird.

Sinkt beispielsweise der Wert für die Freigaben pro Zeiteinheit von einem relativ konstanten Wert (z.B. 50 Freigaben pro Minute) auf einen sehr niedrigen Wert oder sogar Null, so kann davon ausgegangen werden, dass auf der Förderanlage eine Blockade vorliegt. Durch ein übergeordnetes Eingreifen kann diese Blockade wieder aufgelöst werden. Anstelle das Förderobjekt 17 mit der niedrigsten Ordnungsnummer freizugeben, kann eine Freigabe beispielsweise auch zufällig erfolgen.

Vorteilhaft ist es auch, wenn der Schwellwert entsprechend der Anzahl der auf der Förderanlage befindlichen Förderobjekte 17 adaptiert wird. Das heißt, dass der Schwellwert erhöht wird, wenn die Anzahl der transportierten Objekte 17 steigt und umgekehrt. Damit wird vermieden, dass eine sinkende Anzahl von Freigaben, welche durch eine geringe Anzahl an transportierten Förderobjekten 17 begründet ist, als Blockade fehlinterpretiert wird.

Beispielsweise kann so ein Zustand beim Starten eines Kommissionierauftrags eintreten oder beispielsweise auch wenn dieser nahezu abgearbeitet ist. In beiden Fällen befinden sich vergleichsweise wenige Objekte 17 auf der Förderanlage weil sie eben zur Mehrzahl noch im Lager 9 vorhanden oder bereits in Versandbehälter verladen sind. Vorteilhaft ist es auch, wenn ein Pausieren der Entnahme der Förderobjekte 17 an einem Ziel 23a..23c.berücksichtigt wird. Insbesondere beim manuellen Kommissionieren kommt es zu zwangsläufigen Unterbrechungen des Arbeitsablaufs, beispielsweise wenn ein Arbeiter seine Pause antritt oder die Toilette aufsucht. In diesem Fall kann es ebenfalls zu einem Rückgang der Freigaben pro Zeiteinheit kommen, der nicht durch eine Blockade begründet ist.

In diesem Zusammenhang ist es auch zweckmäßig, wenn die Auslagerung von Förderobjekten 17 aus dem Lager 9 entsprechend der Entnahme der Förderobjekte 17 am Ziel 23a..23c angepasst wird. Das heißt, dass die Anzahl der pro Zeiteinheit aus dem Lager 9 entnommenen Förderobjekte 17 gesenkt wird, wenn die Anzahl der pro Zeiteinheit am Ziel 23a..23c entnommenen Förderobjekte 17 sinkt und umgekehrt.

In einer Variante des angegebenen Verfahrens werden die Freigaben pro Zeiteinheit je zu versorgendem Ziel 23a..23c von einer übergeordneten Steuerung überwacht. Dementsprechend wird jene Anhalteeinrichtung 4a, 4b freigegeben, an welcher das Förderobjekt 17 mit dem niedrigsten Soll-Ankunfts-Zeitpunkt TA1..TA3, TB1, TC1..TC3 des betreffenden Ziels 23a..23c wartet, wenn für die dem betreffenden Ziel 23a..23c zugeordneten Freigaben pro Zeiteinheit ein Schwellwert unterschritten wird.

Die Steuerung 5 ist nun generell dazu eingerichtet, ein Förderobjekt 17 zu einem Freigabe-Zeitpunkt freizugeben, welcher im Wesentlichem dem Soll-Ankunfts-Zeitpunkt TA1..TA3, TB1, TC1..TC3 weniger der Soll-Durchlaufzeit t1, t2, t6 entspricht. Darüber hinaus kann auch vorgesehen sein, dass die Steuerung 5 dazu eingerichtet ist, für ein an einem Fördertechnikelement/Knoten Ka..Kz, K1..K34 wartendes Förderobjekt 17 eine Soll-Durchlaufzeit t1, t2, t6 zu berechnen, welche das Förderobjekt 17 planmäßig für den Transport von einer momentanen Position bis zum Zielort 23a..23c benötigt. Alternativ kann diese Berechnung respektive die Berechnung der Soll-Freigabezeitpunkte auch von einer übergeordneten Steuerung ausgeführt werden. Auch die Berechnung der Soll-Ankunfts-Zeitpunkte TA1..TA3, TB1, TC1..TC3 für die Förderobjekte 17, an dem diese planmäßig an einem Zielort 23a..23c eintreffen sollen, wird vorteilhaft von einer zentralen beziehungsweise übergeordneten Steuerung übernommen.

An dieser Stelle wird angemerkt, dass die anhand der Figuren 24 bis 27 erläuterte Behebung von Sortierfehlern, seien sie nun geplant oder ungeplant, ohne die Merkmale des Patentanspruchs 1, das heißt auch ohne die Steuerung des Förderablaufs anhand der Soll-Ankunfts-Zeitpunkte TA1..TA3, TB1, TC1..TC3 anwendbar ist. Darüber hinaus kann der Behebung von Sortierfehlern auch ein anderer Sortieralgorithmus übergeordnet werden.

Beispielsweise kann vorgesehen sein, dass mehrere zu den eingehenden Fördersegmenten 1a, 1b stromabwärts gelegene und mit einer ODER-Verknüpfung logisch verknüpfte Auslöseeinrichtungen für die Freigabe einer Anhalteeinrichtung 4a, 4b beziehungsweise eines Förderobjekts 17 herangezogen werden und eine Anhalteeinrichtung 4a, 4b beziehungsweise ein an dieser wartendes Förderobjekt 17 freigegeben wird, wenn ein dem wartenden Förderobjekt 17 in einer Sortierreihenfolge vorangehendes Förderobjekt 17 eine der verknüpften Auslöseeinrichtungen passiert oder es kein vorangehendes Förderobjekt 17 gibt.

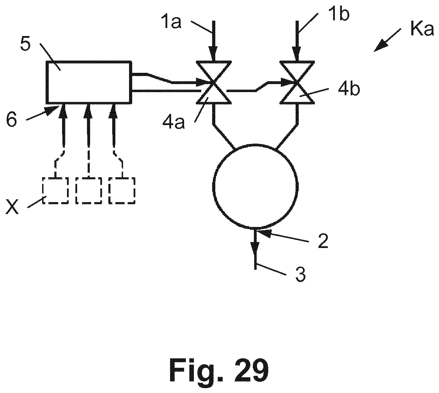

Fig. 29 zeigt dazu in Analogie zu Fig. 1 ein Beispiel eines Fördertechnikelements Kc zum Bündeln von Förderströmen, bei dem die Steuerung 5 eingangsseitig mit mehreren Auslöseeinrichtungen X verbunden ist, welche dem Fördertechnikelement/Knoten Kc nachgeordnet sind. Ein Förderobjekt 17 mit der Ordnungsnummer n wird bei diesem Verfahren nur dann freigegeben, wenn das unmittelbar beziehungsweise direkt vorangehende Förderobjekt 17 mit der Ordnungsnummer n-1 eine der ODER-verknüpften Auslöseeinrichtung X passiert, wodurch es im Grunde möglich ist, eine genaue Ist-Sortierreihenfolge am Ziel 23a..23c zu bilden.

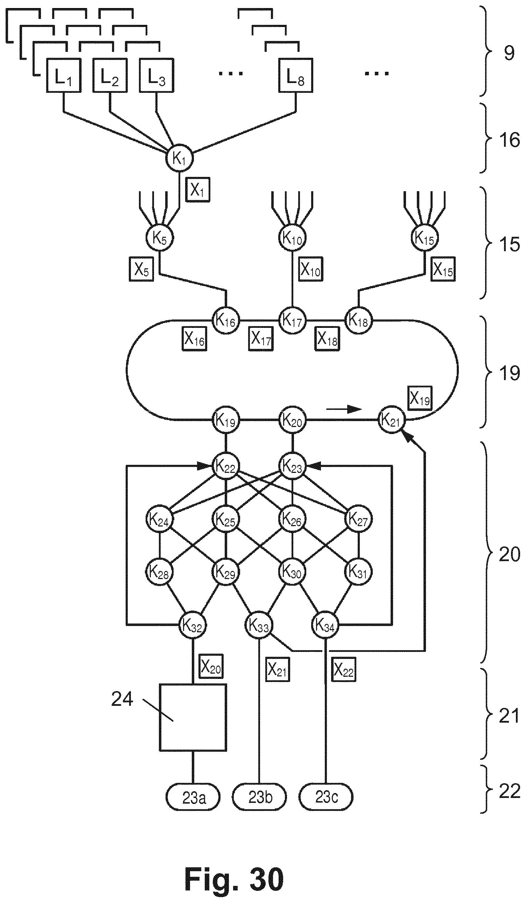

In Anlehnung an die Fig. 11 zeigt Fig. 30 ein Beispiel, wie die Auslöseeinrichtungen X in einer Förderanlage verteilt sein können. Konkret sind in diesem Beispiel mehrere Auslöseeinrichtungen X1..X22 vorgesehen. Jedem Shuttle 16 ist dabei eine Auslöseeinrichtung X1..X4, X6..X9 und X11..X14 auf der Aufnahmeplattform zugeordnet und jedem Lift 15 ist eine Auslöseeinrichtung X5, X10 und X15 auf der Hubplattform zugeordnet.

Es wird ausdrücklich darauf hingewiesen, dass die Anordnung der Auslöseeinrichtungen X1..X22 lediglich beispielhaft ist, um die Funktionsweise der in Fig. 30 dargestellten Förderanlage zu illustrieren und natürlich auch anders erfolgen kann. Insbesondere wird darauf hingewiesen, dass im Netz 20 der besseren Darstellbarkeit halber überhaupt keine Auslöseeinrichtungen X1..X22 eingezeichnet sind. In einer realen Anlage können natürlich auch im Netz 20 Auslöseeinrichtungen X1..X22 an beliebiger Stelle vorgesehen sein. Weiterhin wird darauf hingewiesen, dass die Vernetzung der Knoten K1..K34 mit den Auslöseeinrichtungen X1..X22 in der Fig. 30 ebenfalls nicht explizit dargestellt ist, in einer realen Umsetzung der Förderanlage jedoch selbstverständlich vorliegt.

Beispielsweise können an die Eingänge 6 des Fördertechnikelements K1 die Auslöseeinrichtungen X5 und X16 angeschlossen sein. An das Fördertechnikelement K21 können zum Beispiel die Auslöseeinrichtungen X16..X19 angeschlossen sein. Das Fördertechnikelement K24 kann an nicht dargestellte Auslöseeinrichtungen im Netz 20 angeschlossen sein und so weiter.

Auch im Zusammenhang mit diesem Sortierverfahren ist es möglich, Fehler in einer Sortierreihenfolge zuzulassen und mit Hilfe eines dem Fördertechnikelement/ Knoten Ka..Kz, K1..K34 stromabwärts nachgelagerten Puffers, Sequenzers 24 einer Ausweichstrecke 20, 25 oder einer Rückkopplung 19 zu korrigieren. Möglich ist zudem auch hier, dass mehrere Förderobjekte 17 dieselbe Ordnungsnummer in einer Sortierreihenfolge aufweisen, etwa wenn gleichartige Förderobjekte 17 in einem Förderstrom gruppiert werden sollen.

Zusammenfassend kann gesagt werden, dass das im Anspruch 11 definierte Verfahren ist auch unabhängig von den Merkmalen des Patentanspruchs 1, insbesondere im Zusammenhang mit einem anderen Sortierverfahren, anwendbar ist, wobei die Unteransprüche 6 und 16-19 und 23-24 ebenfalls sinngemäß anwendbar sind. Es resultiert somit ein Verfahren zum Bündeln von Förderströmen an einem Fördertechnikelement/Knoten Ka..Kz, K1..K34 mit mehreren eingehenden Fördersegmenten 1a, 1b, zumindest einer Ankopplung 2 an ein abgehendes Fördersegment 3, auf das die eingehenden Fördersegmente 1a, 1b zusammengeführt werden, und mehreren Anhalteeinrichtungen 4a, 4b zum Anhalten von Förderobjekten 17 beziehungsweise eines Förderflusses auf den eingehenden Fördersegmenten 1a, 1b, wobei
- ein Förderobjekt 17 in einen Puffer, einen Sequenzer 24, eine Ausweichstrecke 20, 25 oder eine Rückkopplung 19 gefördert wird und dort angehalten wird, bis diese Position von einem dem betreffenden Förderobjekt 17 in der Sortierreihenfolge vorangehenden Förderobjekt 17 passiert wurde, wenn dies zu einer Verringerung der Belegungszeit der Förderanlage führt.

Dementsprechend resultiert auch ein Fördertechnikelement/Knoten Ka..Kz, K1..K34 zum Bündeln von Förderströmen, umfassend
- mehrere eingehende Fördersegmente 1a, 1b,
- zumindest eine Ankopplung 2 für ein abgehendes Fördersegment 3, auf das die eingehenden Fördersegmente 1a, 1b zusammengeführt werden, und
- mehrere Anhalteeinrichtungen 4a, 4b zum Anhalten eines Förderflusses auf den eingehenden Fördersegmenten 1a, 1b,
   zusätzlich umfassend eine Steuerung 5, welche dazu eingerichtet ist,
- ein Förderobjekt 17 in einen Puffer, einen Sequenzer 24, eine Ausweichstrecke 20, 25 oder eine Rückkopplung 19 zu fördern und dort anzuhalten, bis diese Position von einem dem betreffenden Förderobjekt 17 in der Sortierreihenfolge vorangehenden Förderobjekt 17 passiert wurde, wenn dies zu einer Verringerung der Belegungszeit der Förderanlage führt.

Weiterhin ist auch das im Anspruch 12 definierte Verfahren unabhängig von den Merkmalen des Patentanspruchs 1, und insbesondere im Zusammenhang mit einem anderen Sortierverfahren, anwendbar, wobei die Unteransprüche 6 und 16-19 und 23-24 ebenfalls sinngemäß anwendbar sind. Es resultiert somit ein Verfahren zum Bündeln von Förderströmen an einem Fördertechnikelement/Knoten Ka..Kz, K1..K34 mit mehreren eingehenden Fördersegmenten 1a, 1b, zumindest einer Ankopplung 2 an ein abgehendes Fördersegment 3, auf das die eingehenden Fördersegmente 1a, 1b zusammengeführt werden, und mehreren Anhalteeinrichtungen 4a, 4b zum Anhalten von Förderobjekten 17 beziehungsweise eines Förderflusses auf den eingehenden Fördersegmenten 1a, 1b, wobei
- ein zweites Förderobjekt 17, welches einem ersten Förderobjekt 17 in einer Soll-Sortierreihenfolge folgt, in einen Puffer, einen Sequenzer 24, eine Ausweichstrecke 20, 25 oder eine Rückkopplung 19 gefördert wird und dort angehalten wird, bis diese Position vom ersten Förderobjekt 17 passiert wurde, wenn das erste Förderobjekt auf der Förderanlage außerplanmäßig verzögert wurde und kein Soll-Ankunfts-Zeitpunkt mehr vor dem Soll-Ankunfts-Zeitpunkt des zweiten Förderobjekts 17 ohne Nutzung des Puffers, des Sequenzers 24, der Ausweichstrecke 20, 25 oder der Rückkopplung 19 mehr möglich ist.

Dementsprechend resultiert auch ein Fördertechnikelement/Knoten Ka..Kz, K1..K34 zum Bündeln von Förderströmen, umfassend
- mehrere eingehende Fördersegmente 1a, 1b,
- zumindest eine Ankopplung 2 für ein abgehendes Fördersegment 3, auf das die eingehenden Fördersegmente 1a, 1b zusammengeführt werden, und
- mehrere Anhalteeinrichtungen 4a, 4b zum Anhalten eines Förderflusses auf den eingehenden Fördersegmenten 1a, 1b,
   zusätzlich umfassend eine Steuerung 5, welche dazu eingerichtet ist,
- ein zweites Förderobjekt 17, welches einem ersten Förderobjekt 17 in einer Soll-Sortierreihenfolge folgt, in einen Puffer, einen Sequenzer 24, eine Ausweichstrecke 20, 25 oder eine Rückkopplung 19 zu fördern und dort anzuhalten, bis diese Position vom ersten Förderobjekt 17 passiert wurde, wenn das erste Förderobjekt 17 auf der Förderanlage außerplanmäßig verzögert wurde und kein Soll-Ankunfts-Zeitpunkt mehr vor dem Soll-Ankunfts-Zeitpunkt des zweiten Förderobjekts 17 ohne Nutzung des Puffers, des Sequenzers 24, der Ausweichstrecke 20, 25 oder der Rückkopplung 19 mehr möglich ist.

An dieser Stelle wird angemerkt, dass auch die Kombination der Patentansprüche 11 und 12 respektive die Kombination der zuvor genannten Varianten (d.h. deren und/oder-Verknüpfung) unabhängig von den Merkmalen des Patentanspruchs 1, und insbesondere im Zusammenhang mit einem anderen Sortierverfahren, anwendbar, wobei die Unteransprüche 6 und 16-19 und 23-24 ebenfalls sinngemäß anwendbar sind.

Generell kann die Steuerung 5 in Hardware ausgeführt sein oder auch in Form eines Software-Algorithmus, der in einem Prozessor ausgeführt wird. Denkbar ist ferner auch, dass mehrere Instanzen des genannten Software-Algorithmus in einem Computer ausgeführt werden.

Vorteilhaft greifen die Fördertechnikelemente/Knoten Ka..Kz, K1..K34 schreibend und/oder lesend auf eine gemeinsame Tabelle mit Soll-Ankunfts-Zeitpunkten TA1..TA3, TB1, TC1..TC3 zu. Beispielsweise kann diese in einer zentralen Steuerung gespeichert sein. Sind die Steuerungen 5 durch mehrere Instanzen eines Software-Algorithmus in einem Computer realisiert, dann kann die gemeinsame Tabelle insbesondere auf diesem Computer gespeichert sein.

Physisch kann die Verbindung zwischen Steuerungen 5, die Verbindung von einer Steuerung 5 zu einer übergeordneten Steuerung oder auch die Verbindung der Auslöseeinrichtungen X1..X22 mit den Steuerungen 5 drahtgebunden oder drahtlos erfolgen. Beispielsweise können die genannten Verbindungen über ein Bussystem realisiert sein oder mit Hilfe eines drahtlosen Netzes erfolgen.

Generell können innerhalb einer Förderanlage Fördertechnikelemente K1..K34 mit unterschiedlicher Freigabestrategie verwendet werden. Beispielsweise können die Fördertechnikelemente K1..K15 dazu eingerichtet sein, ein Förderobjekt 17 mit der Ordnungsnummer n freizugeben, wenn eines der vorangehenden Förderobjekte 17 mit der Ordnungsnummer n-1 oder n-2 eine der ODER-verknüpften Auslöseeinrichtungen X1..X22 passiert, wohingegen die übrigen Fördertechnikelemente K16..K34 beispielsweise dazu eingerichtet sein können, ein Freigabeverfahren unter Zuhilfenahme der angesprochenen Zeitsteuerung auszuführen. Gegebenenfalls können die Vorgaben zur Freigabe eines Förderobjekts 17 im Betrieb auch dynamisch angepasst werden, beispielsweise von einer übergeordneten Steuerung.

Die Ausführungsbeispiele zeigen mögliche Ausführungsvarianten eines erfindungsgemäßen Fördertechnikelements Ka..Kz, K1..K34 respektive einer erfindungsgemäßen Förderanlage, wobei an dieser Stelle bemerkt sei, dass die Erfindung nicht auf die speziell dargestellten Ausführungsvarianten desselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten möglich, die durch Kombinationen einzelner Details der dargestellten und beschriebenen Ausführungsvariante entstehen.

Insbesondere wird festgehalten, dass die dargestellten Vorrichtungen in der Realität auch mehr Bestandteile als dargestellt umfassen können.

Der Ordnung halber sei abschließend darauf hingewiesen, dass zum besseren Verständnis des Aufbaus eines Fördertechnikelements Ka..Kz, K1..K34 respektive einer erfindungsgemäßen Förderanlage dieses/diese bzw. dessen/deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

### Bezugszeichenaufstellung

- 1a, 1b: eingehendes Fördersegment
- 2: Ankopplung für abgehendes Fördersegment
- 3: abgehendes Fördersegment
- 4a, 4b: Anhalteeinrichtung
- 5: Steuerung

- 6: Eingang
- 7a, 7b: Sensor / Leseeinrichtung
- 8: Ausgangsleitung
- 9: Lager
- 10: Regalbediengerät

- 11: Schienen
- 12: Wagen
- 13: Mast
- 14: Hubplattform
- 15: Lift

- 16: Förderfahrzeug ("Shuttle")
- 17: Förderobjekt
- 18: Paternoster
- 19: Schleife
- 20: Netz

- 21: Sortierbereich
- 22: Kommissionierbereich
- 23a..23c: Ziel
- 24: Sortierstufe
- 25: Ausweichstrecke

- A1..A3: Ordnungsnummer Förderobjekt erstes Ziel
- B1: Ordnungsnummer Förderobjekt zweites Ziel
- C1..C3: Ordnungsnummer Förderobjekt drittes Ziel
- Ka..Kz, K1..K34: Fördertechnikelement / Knoten
- L, L1..L8, Lv: Lagerplatz

- X, X1..X22: Auslöseeinrichtung

## Patentansprüche

1. Verfahren zum Bündeln von Förderströmen an einem Fördertechnikelement beziehungsweise Knoten (Ka..Kz, K1..K34) mit mehreren eingehenden Fördersegmenten (1a, 1b), zumindest einer Ankopplung (2) an ein abgehendes Fördersegment (3), auf das die eingehenden Fördersegmente (1a, 1b) zusammengeführt werden, und mehreren Anhalteeinrichtungen (4a, 4b) zum Anhalten eines Förderflusses auf den eingehenden Fördersegmenten (1a, 1b),
**dadurch gekennzeichnet, dass**
- für die Förderobjekte (17) Soll-Ankunfts-Zeitpunkte (TA1..TA3, TB1, TC1..TC3) berechnet werden, an dem die Förderobjekte (17) planmäßig an einem Zielort (23a..23c) eintreffen,
- für ein an einem Fördertechnikelement/Knoten (Ka..Kz, K1..K34) wartendes Förderobjekt (17) eine Soll-Durchlaufzeit (t1, t2, t6) berechnet wird, welche das Förderobjekt (17) planmäßig für den Transport von einer momentanen Position bis zum Zielort (23a..23c) benötigt, und
das Förderobjekt (17) zu einem Freigabe-Zeitpunkt freigegeben wird, welcher im Wesentlichem dem Soll-Ankunfts-Zeitpunkt (TA1..TA3, TB1, TC1..TC3) weniger der Soll-Durchlaufzeit (t1, t2, t6) entspricht.

2. Verfahren nach Anspruch 1, **dadurch gekennzeichnet, dass** die Soll-Ankunfts-Zeitpunkte (TA1..TA3, TB1, TC1..TC3) entsprechend einer Sortierreihenfolge der Förderobjekte (17) berechnet werden.

3. Verfahren nach Anspruch 1 oder 2, **dadurch gekennzeichnet, dass** ein an einem Fördertechnikelement/Knoten (Ka..Kz, K1..K34) wartendes erstes Förderobjekt (17) nach einem zweiten Förderobjekt (17) mit einem weiter in der Zukunft liegenden Soll-Ankunfts-Zeitpunkt (TA1..TA3, TB1, TC1..TC3) freigegeben wird, wenn die Soll-Durchlaufzeit (t1, t2, t6) für das zweite Förderobjekt (17) länger ist als für das erste Förderobjekt (17).

4. Verfahren nach Anspruch 1 oder 2, **dadurch gekennzeichnet, dass** ein an einem Fördertechnikelement/Knoten (Ka..Kz, K1..K34) wartendes erstes Förderobjekt (17) vor einem zweiten Förderobjekt (17) mit einem weiter in der Zukunft liegenden Soll-Ankunfts-Zeitpunkt (TA1..TA3, TB1, TC1..TC3) freigegeben wird, wenn die Soll-Durchlaufzeit (t1, t2, t6) für das zweite Förderobjekt (17) länger ist als für das erste Förderobjekt (17) und das erste Förderobjekt (17) dadurch vor einem dritten Förderobjekt (17), dessen Soll-Ankunfts-Zeitpunkt (TA1..TA3, TB1, TC1..TC3) nach dem Soll-Ankunfts-Zeitpunkt (TA1..TA3, TB1, TC1..TC3) des zweiten Förderobjekts (17) liegt, am Ziel (23a..23c) ankommt.

5. Verfahren nach einem der Ansprüche 1 bis 4, **dadurch gekennzeichnet, dass** mehrere Förderobjekte (17) zum selben Soll-Ankunfts-Zeitpunkt (TA1..TA3, TB1, TC1..TC3) planmäßig an einem Zielort (23a..23c) eintreffen.

6. Verfahren nach einem der Ansprüche 1 bis 5 zum Bilden einer Sortierreihenfolge für ein zu versorgendes Ziel (23a..23c) oder mehrerer solcher Reihenfolgen für mehrere zu versorgende Ziele (23a..23c) in einer Förderanlage mit mehreren Fördertechnikelementen/Knoten (Ka..Kz, K1..K34) der genannten Art, wobei die zumindest eine Ankopplung (2) für ein abgehendes Fördersegment (3) des einen Fördertechnikelements/Knotens (Ka..Kz, K1..K34) mit einem eingehenden Fördersegment (1a, 1b) eines anderen Fördertechnikelements/Knotens (Ka..Kz, K1..K34) direkt oder indirekt verbunden ist.

7. Verfahren nach einem der Ansprüche 1 bis 6, **dadurch gekennzeichnet, dass** die Fördertechnikelemente/Knoten (Ka..Kz, K1..K34) auf eine gemeinsame Tabelle der Soll-Ankunfts-Zeitpunkte (TA1..TA3, TB1, TC1..TC3) zugreifen.

8. Verfahren nach einem der Ansprüche 1 bis 6, **dadurch gekennzeichnet, dass** die Fördertechnikelemente/Knoten (Ka..Kz, K1..K34) auf eine gemeinsame Tabelle von Soll-Freigabe-Zeitpunkten zugreifen.

9. Verfahren nach einem der Ansprüche 1 bis 8, **dadurch gekennzeichnet, dass** vor der Auslagerung von Förderobjekten (17) mehrere Varianten von jeweils eine vorgegebene Sortierreihenfolge einhaltenden Soll-Ankunfts-Zeitpunkten (TA1..TA3, TB1, TC1..TC3) für mehrere Förderobjekte (17) und insbesondere mehrere Ziele (23a..23c) berechnet werden und jene Variante tatsächlich ausgeführt wird, welche die geringste Belegungszeit der Förderanlage verursacht.

10. Verfahren nach einem der Ansprüche 1 bis 9, **dadurch gekennzeichnet, dass** ein Förderobjekt (17) in einen Puffer, einen Sequenzer (24), eine Ausweichstrecke (20, 25) oder eine Rückkopplung (19) gefördert wird und dort angehalten wird, bis diese Position von einem dem betreffenden Förderobjekt (17) in der Sortierreihenfolge vorangehenden Förderobjekt (17) passiert wurde, wenn dies zu einer Verringerung der Belegungszeit der Förderanlage führt.

11. Verfahren nach einem der Ansprüche 1 bis 10, **dadurch gekennzeichnet, dass** ein zweites Förderobjekt (17), welches einem ersten Förderobjekt (17) in einer Sortierreihenfolge folgt, in einen Puffer, einen Sequenzer (24), eine Ausweichstrecke (20, 25) oder eine Rücckopplung (19) gefördert wird und dort angehalten wird, bis diese Position vom ersten Förderobjekt (17) passiert wurde, wenn das erste Förderobjekt (17) auf der Förderanlage außerplanmäßig verzögert wurde und kein Soll-Ankunfts-Zeitpunkt mehr vor dem Soll-Ankunfts-Zeitpunkt des zweiten Förderobjekts (17) ohne Nutzung des Puffers, des Sequenzers (24), der Ausweichstrecke (20, 25) oder der Rückkopplung (19) mehr möglich ist.

12. Verfahren nach einem der Ansprüche 1 bis 11, **dadurch gekennzeichnet, dass** zumindest jene Verfahrensschritte, welche einer Entscheidung über eine Freigabe eines Förderobjekts (17) zugeordnet sind, bis auf die Berücksichtigung eines Soll-Ankunfts-Zeitpunkts (TA1..TA3, TB1, TC1..TC3) / einer Soll-Durchlaufzeit / eines Soll-Freigabe-Zeitpunkts unabhängig von allen anderen Fördertechnikelementen/Knoten (Ka..Kz, K1..K34) und/oder unabhängig von einer zentralen Steuerung ausgeführt werden.

13. Verfahren nach einem der Ansprüche 1 bis 12, **dadurch gekennzeichnet, dass** die Verfahrensschritte im Hinblick auf die Freigabe eines Förderobjekts (17) in allen Fördertechnikelementen/Knoten (Ka..Kz, K1..K34) in identischer Weise ausgeführt werden.

14. Verfahren nach einem der Ansprüche 6 bis 13 zum Betrieb einer Förderanlage der genannten Art mit einem vorgelagerten Lager (9) mit Lagerplätzen (L, L1..Lv), **dadurch gekennzeichnet, dass** das Fördertechnikelement/Knoten (Ka..Kz, K1..K34) als Auslagerungsroboter (10, 16) für das Lager (9) ausgebildet ist.

15. Verfahren nach einem der Ansprüche 1 bis 14, **dadurch gekennzeichnet, dass** die Freigaben pro Zeiteinheit von einer übergeordneten Steuerung überwacht werden und jene Anhalteeinrichtung (4a, 4b) freigegeben wird, an welcher das Förderobjekt (17) mit dem niedrigsten Soll-Ankunfts-Zeitpunkt (TA1..TA3, TB1, TC1..TC3) wartet, wenn für die Freigaben pro Zeiteinheit ein Schwellwert unterschritten wird.

16. Fördertechnikelement beziehungsweise Knoten (Ka..Kz, K1..K34) zum Bündeln von Förderströmen, umfassend
- mehrere eingehende Fördersegmente (1a, 1b),
- zumindest eine Ankopplung (2) für ein abgehendes Fördersegment (3), auf das die eingehenden Fördersegmente (1a, 1b) zusammengeführt werden, und
- mehrere Anhalteeinrichtungen (4a, 4b) zum Anhalten eines Förderflusses auf den eingehenden Fördersegmenten (1a, 1b),
**gekennzeichnet durch**
- eine vom Fördertechnikelement/Knoten (Ka..Kz, K1..K34) umfasste Steuerung (5), welche dazu eingerichtet ist, ein Förderobjekt (17) zu einem Freigabe-Zeitpunkt freizugeben, welcher im Wesentlichem einem Soll-Ankunfts-Zeitpunkt (TA1..TA3, TB1, TC1..TC3), an dem die Förderobjekte (17) planmäßig an einem Zielort (23a..23c) eintreffen, weniger einer Soll-Durchlaufzeit (t1, t2, t6), welche das Förderobjekt (17) planmäßig für den Transport von einer momentanen Position bis zum Zielort (23a..23c) benötigt, entspricht.

17. Förderanlage, umfassend mehrere Fördertechnikelemente/Knoten (Ka..Kz, K1..K34) nach Anspruch 16, **dadurch gekennzeichnet, dass** zumindest eine Ankopplung (2) für ein abgehendes Fördersegment (3) des einen Fördertechnikelements/Knotens (Ka..Kz, K1..K34) mit einem eingehenden Fördersegment (1a, 1b) eines anderen Fördertechnikelements/Knotens (Ka..Kz, K1..K34) direkt oder indirekt verbunden ist.

## Claims

1. A method for bundling conveying streams at a material handling element and/or node (Ka..Kz, K1..K34) with several incoming conveyor segments (1a, 1b), at least one coupling (2) to an outgoing conveyor segment (3), to which the incoming conveyor segments (1a, 1b) are merged, and several holding devices (4a, 4b) for stopping a conveying stream on the incoming conveyor segments (1a, 1b),
**characterized in that**
- for the conveyed objects (17), points in time of target arrival (TA1..TA3, TB1, TC1..TC3) are calculated, at which the conveyed objects (17) are scheduled to arrive at a destination (23a..23c),
- for a conveyed object (17) waiting at a material handling element/node (Ka..Kz, K1..K34), a target run-through time (t1, t2, t6) is calculated, which the conveyed object (17) needs for transport as scheduled from a current position to the destination (23a..23c), and
the conveyed object (17) is released at a point in time of release which corresponds essentially to the point in time of target arrival (TA1..TA3, TB1, TC1..TC3) minus the target run-through time (t1, t2, t6).

2. The method according to claim 1, **characterized in that** the points in time of target arrival (TA1..TA3, TB1, TC1..TC3) are calculated according to a sorting sequence of the conveyed objects (17).

3. The method according to claim 1 or 2, **characterized in that** a first conveyed object (17) waiting at a material handling element/node (Ka..Kz, K1..K34) is released after a second conveyed object (17) with a point in time of target arrival (TA1..TA3, TB1, TC1..TC3) further in the future, if the target run-through time (t1, t2, t6) for the second conveyed object (17) is longer than for the first conveyed object (17).

4. The method according to claim 1 or 2, **characterized in that** a first conveyed object (17) waiting at a material handling element/node (Ka..Kz, K1..K34) is released before a second conveyed object (17) with a point in time of target arrival (TA1..TA3, TB1, TC1..TC3) further in the future, if the target run-through time (t1, t2, t6) for the second conveyed object (17) is longer than for the first conveyed object (17) and the first conveyed object (17) thereby arrives at the destination (23a..23c) before a third conveyed object (17), the point in time of target arrival (TA1..TA3, TB1, TC1..TC3) of which is after the point in time of target arrival (TA1..TA3, TB1, TC1..TC3) of the second conveyed object (17).

5. The method according to one of claims 1 to 4, **characterized in that** several conveyed objects (17) arrive at the same point in time of target arrival (TA1..TA3, TB1, TC1..TC3) as scheduled at a destination (23a..23c).

6. The method according to one of claims 1 to 5 for forming a sorting sequence for a destination (23a..23c) to be supplied or several ones of such sequences for several destinations (23a..23c) to be supplied in a conveyor system with several material handling elements/nodes (Ka..Kz, K1..K34) of said kind, wherein the at least one coupling (2) for an outgoing conveyor segment (3) of one material handling element/node (Ka..Kz, K1..K34) is connected directly or indirectly to an incoming conveyor segment (1a, 1b) of another material handling element/node (Ka..Kz, K1..K34).

7. The method according to one of claims 1 to 6, **characterized in that** the material handling elements/nodes (Ka..Kz, K1..K34) have access to a common table of points in time of target arrival (TA1..TA3, TB1, TC1..TC3).

8. The method according to one of claims 1 to 6, **characterized in that** the material handling elements/nodes (Ka..Kz, K1..K34) have access to a common table of points in time of target release.

9. The method according to one of claims 1 to 8, **characterized in that** before removing conveyed objects (17) from a storage, several variants of points in time of target arrival (TA1..TA3, TB1, TC1..TC3) maintaining a predefined sorting sequence for several conveyed objects (17) and in particular several destinations (23a..23c) are calculated and the particular variant is executed which causes the lowest occupancy time of the conveying system.

10. The method according to one of claims 1 to 9, **characterized in that** a conveyed object (17) is conveyed into a buffer, a sequencer (24), an alternative route (20, 25) or a feedback route (19) and is held there, until this position has been passed by a conveyed object (17) preceding the relevant conveyed object (17) in the sorting sequence, if this results in the reduction of the occupancy time of the conveying system.

11. The method according to one of claims 1 to 10, **characterized in that** a second conveyed object (17), which follows a first conveyed object (17) in a sorting sequence, is conveyed into a buffer, a sequencer (24), an alternative route (20, 25) or a feedback route (19) and is held there until this position has been passed by the first conveyed object (17), if the first conveyed object (17) has been delayed in an unscheduled manner on the conveying system and it is no longer possible to have a point in time of target arrival before the point in time of target arrival of the second conveyed object (17) without using the buffer, the sequencer (24), the alternative route (20, 25) or the feedback route (19).

12. The method according to one of claims 1 to 11, **characterized in that** at least the method steps which are linked to a decision about the release of a conveyed object (17), are performed - apart from taking into account a point in time of target arrival (TA1..TA3, TB1, TC1..TC3) / a target run-through time / a point in time of target release-independently of all other material handling elements/nodes (Ka..Kz, K1..K34) and/or independently of a central controller.

13. The method according to one of claims 1 to 12, **characterized in that** the method steps are performed in the same way with respect to the release of a conveyed object (17) in all material handling elements/nodes (Ka..Kz, K1..K34).

14. The method according to one of claims 6 to 13 for operating a conveyor system of the aforementioned kind with an upstream storage (9) with storage spaces (L, L1..Lv), **characterized in that** the material handling element/node (Ka..Kz, K1..K34) is designed as an unloading robot (10, 16) for the storage (9).

15. The method according to one of claims 1 to 14, **characterized in that** the releases per unit of time are monitored by a superordinate controller and the particular holding device (4a, 4b) is released, at which the conveyed object (17) with the lowest point in time of target arrival (TA1..TA3, TB1, TC1..TC3) is waiting, if a threshold for the releases per unit of time is dropped below.

16. A material handling element or node (Ka..Kz, K1..K34) for bundling conveying streams, comprising
- several incoming conveyor segments (1a, 1b),
- at least one coupling (2) for an outgoing conveyor segment (3), to which the incoming conveyor segments (1a, 1b) are merged, and
- several holding devices (4a, 4b) for stopping a flow on the incoming conveyor segments (1a, 1b),
**characterized by**
- a controller (5) comprised by the material handling element/node (Ka..Kz, K1..K34), which is configured to release a conveyed object (17) at a point in time of release, which corresponds essentially to a point in time of target arrival (TA1..TA3, TB1, TC1..TC3), at which the conveyed objects (17) arrive as scheduled at a target destination (23a..23c), minus a target run-through time (t1, t2, t6) which the conveyed object (17) needs for transport from a current position to a target destination (23a..23c).

17. A conveyor system, comprising several material handling elements/nodes (Ka..Kz, K1..K34) according to claim 16, **characterized in that** at least one coupling (2) for an outgoing conveyor segment (3) of one material handling element/node (Ka..Kz, K1..K34) is connected directly or indirectly to an incoming conveyor segment (1a, 1b) of another material handling element/node (Ka..Kz, K1..K34).

## Revendications

1. Procédé de concentration de flux de convoyage sur un élément de système de convoyage resp. un nœud (Ka... Kz, K1.. K34) avec plusieurs segments de convoyage entrants (1a, 1b), au moins un couplage (2) à un segment de convoyage sortant (3), au niveau duquel les segments de convoyage entrants (la,lb) sont regroupés, et plusieurs dispositifs d'arrêt (4a, 4b) pour l'arrêt d'un flux de convoyage sur les segments de convoyage entrants (1a, 1b),
**caractérisé en ce que**
- pour les objets de convoyage (17), sont calculés des moments d'arrivée de consigne (TA1... TA3, TB1, TC1...TC3) auxquels les objets de convoyage arrivent comme prévu à une destination (23a...23c),
- pour un objet à convoyer (17) attendant au niveau d'un élément de système de convoyage / nœud (Ka...Kz, K1...K34) est calculé un temps de traversée de consigne (t1, t2, t6) que l'objet à convoyer (17) nécessite comme prévu pour le transport d'une position instantanée jusqu'à la destination (23a...23c) et
l'objet à convoyer (17) est libéré à un moment de libération qui correspond globalement au moment d'arrivée de consigne (TA1... TA3, TB1, TC1...TC3) moins le temps de traversée de consigne (t1, t2, t6).

2. Procédé selon la revendication 1, **caractérisé en ce que** les moments d'arrivée de consigne (TA1... TA3, TB1, TC1...TC3) sont calculés en fonction d'une séquence de tri des objets à convoyer (17).

3. Procédé selon la revendication 1 ou 2, **caractérisé en ce qu'**un premier objet à convoyer (17) attendant au niveau d'un élément de système de convoyage / nœud (Ka...Kz, K1...K34) est libéré après un deuxième objet à convoyer (17) avec un moment d'arrivée de consigne (TA1... TA3, TB1, TC1...TC3) se trouvant plus loin dans le futur, lorsque le temps de traversée de consigne (t1, t2, t6) pour le deuxième objet à convoyer (17) est plus long que pour le premier objet à convoyer (17).

4. Procédé selon 1a revendication 1 ou 2, **caractérisé en ce qu'**un premier objet à convoyer (17) attendant au niveau d'un élément de système de convoyage / nœud (Ka...Kz, K1...K34) est libéré avant un deuxième objet à convoyer (17) avec un moment d'arrivée de consigne (TA1... TA3, TB1, TC1...TC3) se trouvant plus loin dans le futur, lorsque le temps de traversée de consigne (t1, t2, t6) pour le deuxième objet à convoyer (17) est plus long que pour le premier objet à convoyer (17) et le premier objet à convoyer (17) arrive ainsi à la destination (23a...23c) avant un troisième objet à convoyer (17) dont le moment d'arrivée de consigne (TA1... TA3, TB1, TC1...TC3) se trouve après le moment d'arrivée de consigne (TA1... TA3, TB1, TC1...TC3) du deuxième objet à convoyer (17).

5. Procédé selon l'une des revendications 1 à 4, **caractérisé en ce que** plusieurs objets à convoyer (17) arrivent comme prévu à une destination (23a...23c) au même moment d'arrivée de consigne (TA1... TA3, TB1, TC1...TC3).

6. Procédé selon l'une des revendications 1 à 5, pour la formation d'une séquence de tri pour une destination (23a...23c) à alimenter ou de plusieurs séquences pour plusieurs destinations (23a...23c) à alimenter dans une installation de convoyage avec plusieurs éléments de système de convoyage / nœuds (Ka...Kz, K1...K34) du type mentionné, dans lequel l'au moins un couplage (2) pour un segment de convoyage sortant (3) d'un élément de système de convoyage / nœud (Ka...Kz, K1...K34) est relié directement ou indirectement avec un segment de convoyage entrant (1a, 1b) d'un autre élément de système de convoyage / nœud (Ka...Kz, K1...K34).

7. Procédé selon l'une des revendications 1 à 6, **caractérisé en ce que** les éléments de système de convoyage / nœuds (Ka...Kz, K1...K34) ont accès à un tableau commun des moments d'arrivée de consigne (TA1... TA3, TB1, TC1...TC3).

8. Procédé selon l'une des revendications 1 à 6, **caractérisé en ce que** les éléments de système de convoyage / nœuds (Ka...Kz, K1...K34) ont accès à un tableau commun des moments de libération de consigne.

9. Procédé selon l'une des revendications 1 à 8, **caractérisé en ce que**, avant le transfert des objets à convoyer (17), plusieurs variantes de moments d'arrivée de consigne (TA1... TA3, TB1, TC1...TC3) respectant chacun une séquence de tri prédéterminée sont calculés pour plusieurs objets à convoyer (17) et plus particulièrement plusieurs destinations (23a...23c) sont calculées et la variante que provoque le temps d'occupation le plus court de l'installation de convoyage est réellement exécutée.

10. Procédé selon l'une des revendications 1 à 9, **caractérisé en ce qu'**un objet à convoyer (17) est convoyé vers un tampon, un séquenceur (24), un itinéraire de délestage (20, 25) ou un couplage de retour (19) et y est arrêté jusqu'à ce que cette position soit passée par un objet à convoyer (17) précédant l'objet à convoyer (17) concerné dans la séquence de tri, lorsque cela conduit à une réduction du temps d'occupation de l'installation de convoyage.

11. Procédé selon l'une des revendications 1 à 10, **caractérisé en ce qu'**un deuxième objet à convoyer (17), qui suit un premier objet à convoyer (17) dans une séquence de tri, est convoyé vers un tampon, un séquenceur (24), un itinéraire de délestage (20, 25) ou un couplage de retour (19) et y est arrêté jusqu'à ce que cette position soit passée par le premier objet à convoyer (17), lorsque le premier objet à convoyer (17) a été retardé sur l'installation de convoyage sans que cela ne soit prévu et lorsque aucun moment d'arrivée de consigne n'est plus possible avant le moment d'arrivée de consigne du deuxième objet à convoyer (17) sans l'utilisation du tampon, du séquenceur (24), de l'itinéraire de délestage (20, 25) ou du couplage de retour (19).

12. Procédé selon l'une des revendications 1 à 11, **caractérisé en ce qu'**au moins les étapes du procédé qui correspondent à une décision par l'intermédiaire concernant une libération d'un objet à convoyer (17), excepté la prise en compte d'un moment d'arrivée de consigne (TA1... TA3, TB1, TC1...TC3) / d'un temps de traversée de consigne / d'un moment de libération de consigne, sont exécutées indépendamment de tous les autres éléments de système de convoyage / nœuds (Ka...Kz, K1...K34) et/ou indépendamment d'une commande centrale.

13. Procédé selon l'une des revendications 1 à 12, **caractérisé en ce que** les étapes du procédé sont exécutées de manière identique en ce qui concerne la libération d'un objet à convoyer (17) dans tous les éléments de système de convoyage / nœuds (Ka...Kz, K1...K34).

14. Procédé selon l'une des revendications 6 à 13, pour la commande d'une installation de convoyage du type mentionné avec un stockage en amont (9) avec des emplacements de stockage (L, L1...Lv), **caractérisé en ce que** l'élément de système de convoyage / nœud (Ka...Kz, K1...K34) est conçu comme un robot de transfert (10, 16) pour le stockage (9).

15. Procédé selon l'une des revendications 1 à 14, **caractérisé en ce que** les libérations par unité de temps sont surveillées par une commande principale et le dispositif d'arrêt (4a, 4b) au niveau duquel attend l'objet à convoyer (17) avec le moment d'arrivée de consigne (TA1... TA3, TB1, TC1...TC3) le plus précoce est libéré lorsque, pour les libérations par unité de temps, on passe en dessous d'une valeur seuil.

16. Élément de système de convoyage resp. nœud (Ka...Kz, K1...K34) pour la concentration de flux de convoyage, comprenant
- plusieurs segments de convoyage entrants (1a, 1b),
- au moins un couplage (2) pour un segment de convoyage sortant (3), sur lequel les segments de convoyage entrants (1a, 1b) sont regroupés et
- plusieurs dispositifs d'arrêt (4a, 4b) pour l'arrêt d'un flux de convoyage sur les segments de convoyage entrants (1a, 1b),
**caractérisé par**
- une commande (5) comprise dans l'élément de système de convoyage / nœud (Ka...Kz, K1...K34), qui est conçue pour libérer un objet à convoyer (17) à un moment de libération, qui correspond globalement à un moment d'arrivée de consigne (TA1... TA3, TB1, TC1...TC3) auquel les objets à convoyer (17) arrivent comme prévu à une destination (23a...23c), moins un temps de traversée de consigne (t1, t2, t6) que nécessite comme prévu l'objet à convoyer (17) pour le transport d'une position instantanée jusqu'à la destination (23a...23c).

17. Installation de convoyage comprenant plusieurs éléments de système de convoyage resp. nœuds (Ka...Kz, K1...K34) selon la revendication 16, **caractérisé en ce qu'**au moins un couplage (2) pour un segment de convoyage sortant (3) d'un élément de système de convoyage / nœud (Ka... Kz, K1...K34) est relié directement ou indirectement avec un segment de convoyage entrant (1a, 1b) d'un autre élément de système de convoyage / nœud (Ka...Kz, K1...K34).
